Europäisches Patentamt

European Patent Office

Office européen des brevets

(11) Publication number: **0 408 309 A2**

# EUROPEAN PATENT APPLICATION

(21) Application number: 90307525.7

(51) Int. Cl.⁵: **G06F 3/023**

(22) Date of filing: **10.07.90**

(30) Priority: **12.07.89 US 379588**

(43) Date of publication of application:
**16.01.91 Bulletin 91/03**

(84) Designated Contracting States:
**DE FR GB IT**

(71) Applicant: **International Business Machines Corporation**
**Old Orchard Road**
**Armonk, N.Y. 10504(US)**

(72) Inventor: **Burkes, Theresa Ann**
**16765 Spring Hill Court**
**Morgan Hill, CA 95037(US)**

Inventor: **Little, Benjamin Russell**
**5475 Don Basillo Court**
**San Jose, CA 95123(US)**
Inventor: **Marlino, Phyllis Jaye**
**212 Sherry Court**
**San Jose, CA 95119(US)**
Inventor: **Pavela, Thomas Joseph**
**1833 Cape Horne Drive**
**San Jose, CA 95133(US)**

(74) Representative: **Bailey, Geoffrey Alan**
**IBM United Kingdom Limited Intellectual Property Department Hursley Park**
**Winchester Hampshire SO21 2JN(GB)**

(54) Message streaming with command-option response handling.

(57) Operator-specified message streaming supports the subsetting of messages for display and logging according to selection criteria specified and entered by an operator at a console. The selection criteria are used to define a message stream. A defined message stream is activated by being linked by the user to a display resource at the user's terminal. As messages are received by the console, they are compared against the message streaming criteria of the active message streams. For any message whose attributes match the criteria defining an active message stream, that message is displayed on the work screen linked to the active message stream. The invention enables the operator to specify, upon command issuance, how command responses are to be handled. Responses may be streamed, sent to specific display resources, or specifically sought by invoked functions.

FIG. 3

## MESSAGE STREAMING WITH COMMAND-OPTION RESPONSE HANDLING

The invention is in the field of message processing, and more particularly concerns the display of computer system-generated messages through terminal display resources.

Interactive computer processing involves alternately inputting information to a process and then receiving from the process information responsive to the input. Interactive systems are frequently referred to as "conversational" systems, and are supported by presentation of a sequence of "panels". Each panel in a sequence consists of a predefined display image providing information responsive to a previous input, and also prompting the next input by presentation of a menu of one or more alternative commands. The particular sequence of panels depends upon a specific set of input/response steps. An interactive computer system which participates in a dialogue with a user through the sequence panels is referred to as a "panel-driven" system.

In interactive processing, the terms "dialogue", "session", and "conversation", are synonymous. A man-machine conversation implies execution of a process in the computer to support the conversation. Modern multi-programming systems support the concurrent execution of a plurality of processes, implying the ability of such systems to conduct a plurality of conversations simultaneously. Multiple human voices are drawn into a multi-conversational system by time sharing. Time sharing is a technique whereby a plurality of programs can be executed in a single computing facility while users conduct dialogues with the programs during execution.

A currently-available computing system providing panel-driven, interactive computing for a plurality of users with a multi-programming, time-sharing facility is the MVS (multiple virtual storage) system, OS/VS2, Release 2, with a time-sharing option (TSO). These products are available from the International Business Machines Corporation, the assignee of this patent application.

Another improvement in modern multi-programming, time-shared systems is, generically the ability to subdivide terminal resources into consoles, and to associate each console with a window. In this regard, a console is a part of a computer terminal resource used as the man-machine interface for conversation. A console can refer to a specific, dedicated complement of I/O hardware; it can also refer to a virtual entity which operates in parallel with other virtual consoles through the same I/O hardware.

A window broadly is a subdivision of virtual display space which is allocated to a console. Conventionally, a window is mapped to an area on a physical display surface such as a CRT. The mapping on the display surface is referred to as a "viewport". However, the term "window" is sometimes used synonymously with "viewport". Currently, the term "screen" is sometimes used to designate a viewport.

Typical windowing systems provide the ability to map to any portion of the visual output resources in a terminal. Thus, if terminal resources include a plurality of CRTs, each can comprise the viewport for a respective window. Alternatively, a plurality of windows can be mapped onto designated viewports on a single CRT display surface.

The basic component of information exchanged between an executing program and a user is a message. A message is an ordered set of characters which are transferred as a unit. A necessary concomitant with a multi-user, multi-programming, time-shared computing system is a communications facility which handles messages. The message handling facility examines and processes the control characteristics of a message and conducts operations necessary to forward messages from a producer and receive messages for a consumer.

Structurally, a message is a multi-field data object, each of whose fields contains specifically designated characteristic information. Generally a message format includes a message header, the leading part of the message that contains information respecting its source and destination, its priority, its type, and other forms of information. Hereinafter this information is referred to as "control data". In currently-available systems, messages also include a message identifier, a code which identifies a predefined message, and which indexes to a description for that predefined message in a message file. A message also includes a message text containing the information to be conveyed from the originator to the consumer. A message text is that part of the message exclusive of the control data and message identifier.

Interactive systems with panel-driven operations are intended to reduce the operating complexity of computer systems and to enhance their useability. In system operation, a series of conversations between user and the system may occur, initiated by either entity.

From the user's point of view, messages received from the system are broadly classed as unsolicited messages or as responses.

System-initiated conversations result in provision to the user of unsolicited messages from the system. Unsolicited messages may require a response from the user, or be intended only to inform.

Operator-initiated conversations consist of commands entered by a user and their associated responses from one system. It is understood that any one command may initiate more than one response, with at least one response being expected in non-exceptional cases.

In the system where a user may engage simultaneously in system-initiated and operator-initiated conversations, a significant problem arises in selection and display of messages to the operator. In this regard, there is a limit to the rate at which an operator can normally handle messages. If the unsolicited message rate is too high, the operator may miss important messages. Messages which are only ministerial or informational may have little interest for the operator. Too many messages of this type may attenuate the operator's attention, resulting in missing important messages. In large systems with many operators, each operator is interested only in a particular subset of messages. Message delivery resources for current display technology can accommodate only a limited number of messages before overflow occurs. Given a large number of messages, an operator may be unable to extract everything of interest from the total. Particularly, the operator may lose messages requiring timely response. Last, mismatch of language capability can result in a loss of text of a message in a language foreign to the consumer.

As a result, there is a manifest need to provide to the individual operator in a multi-programming, multi-user system, the ability to selectively constrain the message traffic directed to the operator. Preferably this ability will let the operator selectively reduce and configure message traffic. In the prior art, there is provision for routing of unsolicited messages to identified consoles. This ability resides in the IBM MVS/XA architecture in the form of message routing codes. Relatedly, in this product, messages are assigned one or more routing codes, which are placed in the control data section of a message header. Routing codes are predetermined at the time of system initialization. In order to route messages in response to the code, a user will assign routing codes to consoles. This assignment is reported to the system, enabling the system to determine the correct destination for an unsolicited message, following which the system places the message on an appropriate destination queue.

The MVS/XA product also enables an operator, after invocation of the routing function, to limit messages that appear on a specific console. This limitation function differentiates among messages on the basis of control data relevant to the way in which unsolicited messages are presented.

The prior art does not support the selective delivery of all messages, because it does not route responses to operator-initiated conversations. Instead, these responses are returned to the console through which the related commands were entered.

Additionally, the prior art routing procedure is relatively rigid. In this regard, both routing and message limitation are done using a limited number of standards which are universal to the system. Consequently, an operator can shape and constrain his message traffic only by using a constrained set of preselected standards.

Viewed from one aspect the invention provides a method of selectively delivering messages generated by a multi-console, multi-programming computer system for output through visual output resources of a console of said computer system, such method comprising the steps of:

at a console of said computer system, selecting and entering into said computer system message delivery criteria, said message delivery criteria corresponding to attributes of said messages;

initiating a first visual output resource component at a console in said computer system;

binding said visual output component to said message delivery criteria;

providing a sequence of messages from said computer system to the consoles of said system;

comparing the message attributes of messages in said sequence of messages with said message delivery criteria; and

for a message in said sequence of messages with message attributes which match said message delivery criteria, delivering said message to said visual output component for display.

A significant advantage of this invention is the provision to a user of the ability to tailor message traffic to visual resources under the users control in a multi-user system in which user-destined messages include both unsolicited information generated by system processes asynchronously to user activity, and program responses to prior user commands.

An embodiment of the invention will now be described by way of example only, with reference to the accompanying drawings in which:

Figure 1 illustrates a multi-user, multi-programming system in which messages are routed to consoles according to a prior art routing procedure.

Figure 2 is an illustration representative of the capacity of the prior art to support a plurality of separate viewports on a single display screen.

Figure 3 is a flow diagram illustrating the procedure of an embodiment of the invention.

Figure 4 is a schematic diagram of tabularized message criteria sets which are indexed to message streams defined in an embodiment of the invention.

Figure 5 is a block diagram illustrating the interconnections of functions which support the procedure of an embodiment of the invention in a user terminal of multi-terminal, multi-programming system with message handling capability.

Figure 6 is a block diagram illustrating process inter-connection between the functional blocks illustrated in Figure 5 for message streaming to a terminal.

Figure 7 is a block diagram illustrating process and inter-connection between functional blocks illustrated in Figure 5 in support of command option response handling, and also in support of dialogue message processing.

Figure 8 illustrates multi-viewport formatting for the invention.

Figures 9A-9I illustrate a sequence of panels used in the described embodiment of the invention.

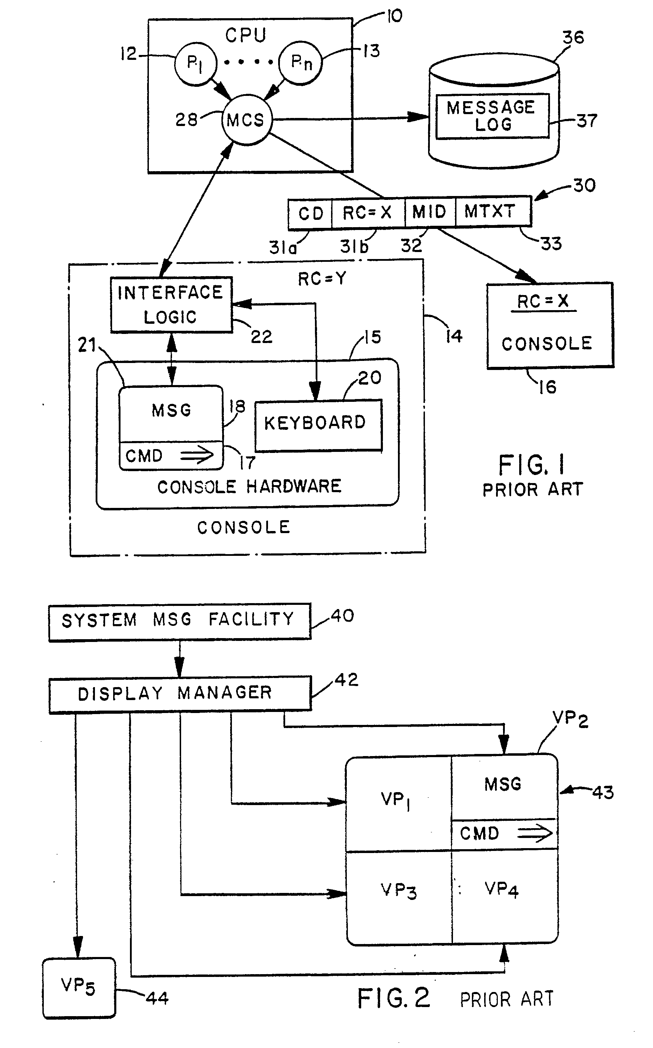

Understanding of the invention will be supported by an understanding of the prior art multi-user, multi-programming system of Figure 1. In Figure 1, a computer system includes a central computing facility 10 with a CPU in which programs 12, 13 execute, and consoles 14, 16, connected to the central computing facility. Console configuration is illustrated with respect to console 14, it being understood that the configuration of console 14 substantially corresponds with that of all other consoles of the system. The console 14 includes hardware 15 including a display device component 21 and a keyboard component 20. The display device component 21 includes a display surface upon which a command entry viewport 17 and a message display viewport 18 are displayed. The command viewport 17 provides visual feedback to the user during entry of commands through the keyboard 20. The message viewport 18 gives the user information produced by an executing program. The console 14 includes message interface logic 22 which supports message routing to the console, and provision of commands from the console to the central facility. Information exchanged between the central computing facility 10 and the console 14 is by way of a set of procedures distributed between the central facility 10 and the console 14 which cooperatively execute to support the routing of messages. One such facility is the multiple console support system (MCS) available from the International Business Machines Corporation for use with MVS-operating systems. In the central facility 10, the information exchange handling component is a MCS component 28.

A general message format is illustrated by the multi-field message 30 in Figure 1. In the message 30, the message header includes a control data (CD) field 31a and a field for the routing code (RC) 31b. Following the header is the message identification code contained in a message id (MID) field 32 trailing the header and a field (MTXT) 33 holding the text of the message.

The process of message routing in the system of Figure 1 is well understood, and involves protocol for delivering messages based upon control and MID data.

Delivery of messages from the central facility 10 to consoles according to the prior art routing method depends upon the routing code placed in the field 31b of a message. Figure 1, the routing code of the message 30 is routing code X. Therefore, the message 30 will be delivered to the console 16, which is the console identified as X.

The prior art computer system includes the ability to process message control information by, for example, inserting, deleting, or altering message control data. Further, this capacity exists in each message sending process in the central facility.

Last, message traffic in a computer system such as that illustrated in Figure 1 is preserved, usually on a direct access storage device (DASD) such as the device 36, in the form of a message log 37. The message log 37 can consist of a chronological listing of every message sent from the facility 10 to the terminals of the system.

The multi-programming aspect of the Figure 1 system permits a single user operating the system through the console 14 (or any other console in the system) to initiate and control the execution of programs in the CPU of the facility 10. To support multi-program execution, the facility 10 further must execute its own operating system program. Last, programs supporting system-wide functions such as networking are also executed in the CPU central facility 10. Thus programs 12, 13 can include the operating system program of the computer system of Figure 1, a multiple console support program, a network program, a job entry program, a communications program, and a plurality of data base management programs, as well as an information management system program.

The prior art includes many facilities for supporting interactive programming such as is described above. One such facility is the Interactive Systems Productivity Facility (ISPF) available from the International Business Machines Corporation. This facility includes a set of routines which execute to operate the console 14 in interactive mode.

Figure 2 illustrates the capacity of the prior art to display messages in a plurality of viewports on a screen. In Figure 2, a system message facility provides a stream of messages to a terminal. The messages are provided to terminal consoles according to the prior art routing method described above. A console provides visual interface between the user and the system in an interactive program by a virtual mapping through a window, which, in turn, is mapped to a viewport (VP). The display manager routes messages, based upon the routing code to the consoles and maps the console messages according to the routing designations. The display manager 42 therefore can route messages to one of a plurality of view ports (VP₁-VP₄) on a single display screen 43. Alternatively, a viewport (such as the view port VP₅) can occupy an entire display screen (such as the screen 44).

Embodiments of the invention provide a procedure for streaming messages in a computer system. As used hereinafter, the term "message" includes both unsolicited messages and responses to user commands. The terms "user" and "operator" are synonymous. The term "streaming" denotes the selective delivery to operator-designated viewports of a set of messages in the sequence delivered to a terminal according to selection criteria entered by the user through the user's console. A message stream therefore is a set of messages received by the user terminal and selected by the selection criteria contained in the stream definition entered by the user. Each message stream is given a name.

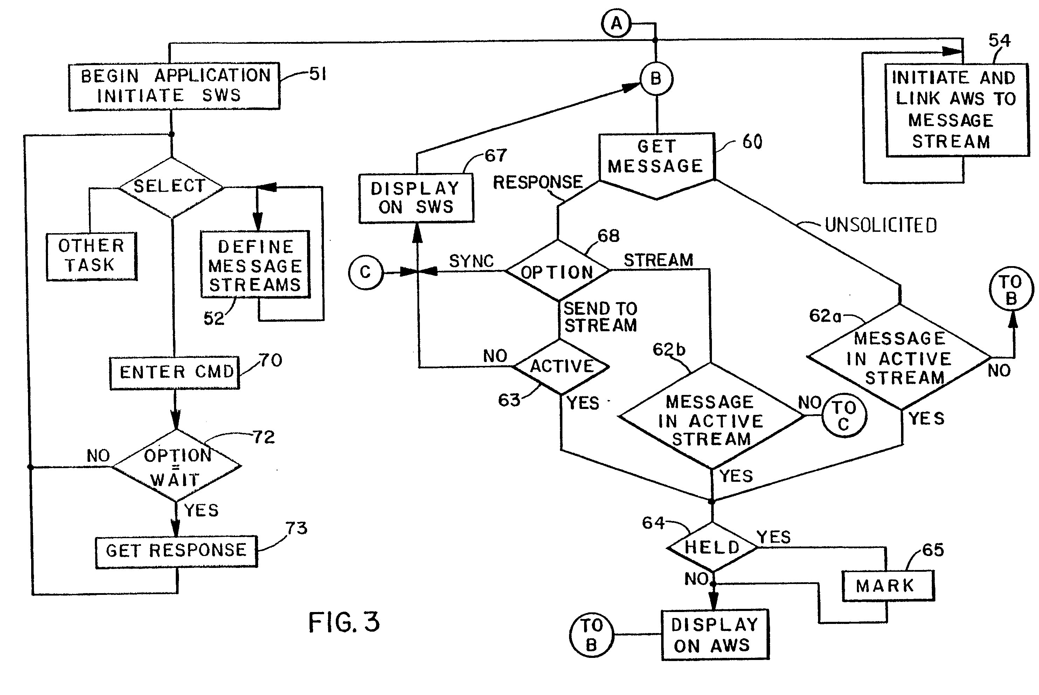

The procedure of the described embodiments of the invention is illustrated in its general form in Figure 3. In Figure 3, the procedure starts in step 51 with an operator initiating a viewport referred to as a synchronous work screen (SWS) and beginning an operations application in a multi-programming, multi-user system at a terminal in the system. Initiation of the application is conventional and include the allocation of processing storage resources necessary to accomplish the operator's purpose. Once the application is initiated, the operator will enter commands into, and receive messages from, the system.

A synchronous work screen is a viewport for a panel-driven operations task including operator-initiated conversations with the computing system. The synchronous work screen may be one of a plurality of viewports on a single display surface. Alternatively, the synchronous work screen can occupy an entire display surface in a mutli-screen terminal.

Using the synchronous work screen initiated in step 51, the operator may define and name one or more message streams in step 52. An operator defines a message stream by entering one or more sets of criteria through the synchronous work screen. Criteria sets are linked together and assembled into a message definition, which is given a name. Once defined, a message stream is activated by linking it with a viewport on which messages in the stream are displayed.

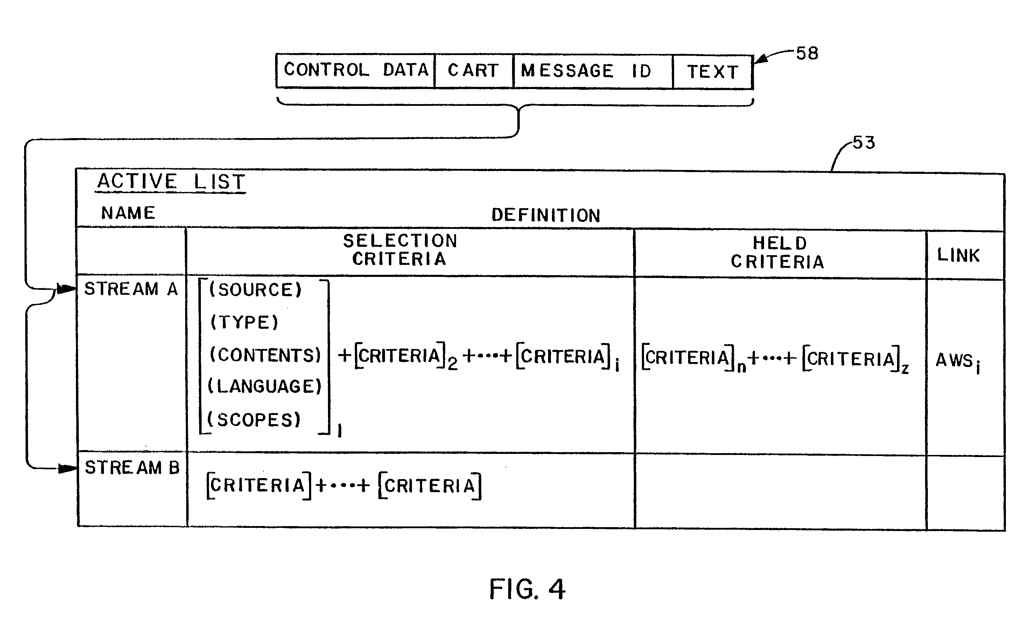

Figure 4 illustrates conceptually the result of step 52. In Figure 4, the map of a set of active message streams (ACTIVE LIST) is indicated by reference numeral 53. The active list 53 is an indexed table in which a message stream name indexes to first and second collections of message criteria sets. The first collection is termed "selection criteria" and is followed by a second collection of sets termed "held criteria". Each line of the list 53 represents a named message stream which is defined by the criteria sets in the line. For example, message stream A is defined by selection criteria sets 1-i, and held criteria sets n-t. Each message criteria set in the selection criteria collection of stream A includes a set of specific values for message characteristics found in the control, identification, and textual fields of a message. Message selection criteria set 1 includes values for message source, message type, message contents, message language, and the delivery scope of a message. Selection criteria sets 2-i and held criteria sets n-t are similarly constructed. The active list 53 also includes a message stream definition for stream B which is composed only of a collection of selection criteria sets.

Next, returning to Figure 3, after initiating a synchronous work screen, the terminal operator may initiate a viewport termed an "asynchronous work screen" (AWS) in step 54. An asynchronous work screen is defined as a viewport for displaying a message stream defined in the active list 53. In step 54, the operator links the asynchronous work screen with a defined message stream. The linkage is illustrated in Figure 4 in the column entitled "link". As Figure 4 shows, asynchronous screen AWSᵢ is linked to stream A. In this regard, linking, or binding, an asynchronous work screen with a message stream means that the linked screen will display messages in the defined stream to which it is linked.

Reference to Figure 4 will provide a basic view of how the remainder of the procedure in Figure 3 operates to stream messages to viewport AWSᵢ. In Figure 4 a message 58 is received at the terminal where the screen AWSᵢ has been initiated. The characteristics of the message, including the control data, the message id, and the text, are compared against the criteria sets for each of the streams defined in the active list, until the comparison indicates a match. Information specifying the source, type, contents, and language, as well as the delivery scope of the message 58 is found in its attributes. The values representing this information are compared with the values in each criteria set. For example, with regard to criteria set 1, the source, type, contents, language, and delivery scope values in the message 58 are compared with the values for those parameters which are given in set 1. Thus, the specific value for the message source data contained in the message 58 is compared with the message source value in criteria set 1, the message type value in message 58 is compared with the message type value in criteria set 1, and so on. The results of the comparisons between the values in the message 58 and the values in criteria set 1 are ANDED. The comparison/ANDing process is continued for each of the criteria sets in the selection criteria in the order with which those sets are entered. If at least one message selection criteria set matches the message 58, the comparing procedure moves to the held criteria sets. The structure of the held criteria sets is the same as the structure of the selection criteria sets, and the comparing procedure is conducted identically.

As the active message list 53 illustrates, a stream is necessarily and sufficiently defined by at least one selection criteria set; there may be additional selection criteria sets and there may be held criteria sets.

In this described embodiment of the invention, the control data field includes a command response token (CART). As explained below, when a command is forwarded to the central facility, the CART is attached to indicate a command-response option. When the command is processed and a response is generated, the CART is moved to the control data field of the responsive message. For messages which are responses, the CART keys the streaming procedure. For unsolicited messages, the CART is undefined and other control data information is configured to indicate that the message is unsolicited. The possible values for the CART are illustrated in Table I.

TABLE I

CART Token Setting


STREAM


SEND TO STREAM_

SEND TO SYNC

WAIT

UNDEFINED


In Table I, the STREAM option causes the procedure to treat the response in the same manner as an unsolicited message. The SENDTO STREAM indicates that the response is to be sent to a specific stream. The SENDTO SYNC setting indicates that the message is to be provided to the synchronous work screen. The WAIT token signifies that the process generating command at the terminal will enter a WAIT state for a certain period of time in order to receive a response.

Returning to Figure 3 and the explanation of the procedure of the described embodiment of the invention, as the synchronous work screen begun in step 50 continues to operate, incoming messages are streamed from node A according to the procedure entered through node B. The messages are obtained from a message handler in step 60. If the message is unsolicited or the CART is undefined, decision 62a is entered. In decision 62a, the message is streamed by comparison with the selection criteria sets which define each stream in the active list. If the message meets the parameter values in at least one criteria set of an active message stream, the positive exit is taken from decision 62a and decision 64 is entered. In decision 64 the message is compared with any held criteria sets in the message stream definition. If the message matches one of the held criteria sets in the stream definition, the positive exit is taken from decision 64 and the message is tagged for special handling. Such special handling may include, for example, display in a particular section of the viewport on which the asynchronous work screen is displayed. If not held, the negative exit is taken from the decision 64 and the message is passed for display in a general message section of the viewport. The procedure then loops back through node B to obtain another message.

Assuming that the message obtained in step 60 has a defined CART, the token is inspected in decision 68. As will be explained below, the WAIT option coded in the CART will result in the message being delivered by a different logical path. However, if the option is STREAM, SENDTO SYNC, or SENDTO STREAM_ the appropriate exit will be taken from the decision 68. If the option is STREAM, the message is processed through decision 62b as already described for unsolicited messages in step 62a. In the preferred embodiment, if a message with a defined CART cannot be streamed, it is provided to the synchronous work screen.

If the CART code indicates that the SENDTO STREAM_ option was taken, the code exits decision 68 and proceeds to decision 63. In decision 63, the code consults the active list table 53 to determine whether the stream indicated in the option is linked to an asynchronous work screen. If it is, the positive exit is taken from decision 63 and the message is compared with the held criteria for the named message stream as described above. If there is no link to an asynchronous work screen, the negative exit is taken from decision 63 and the message is provided to the synchronous work screen for display in step 67.

If the CART indicates that the SENDTO SYNC option has been selected, the procedure path is 68, 67, B, with the message being provided to the synchronous work screen for display.

Assume now that the application begun in step 51 is an interactive one which produces a panel with a command entry line. As explained below, the command format will include an OPTION field into which one of the defined options in Table I will be entered. The command, with its selected option, will be entered in step 70. If the selected option is the WAIT option, the positive exit from the decision 72 will be taken and a Get routine will be invoked in step 73 to obtain the message or messages responding to the entered command. Each message with a CART encoded WAIT which responds to the entered command will be obtained in step 73 and returned to the interactive task. If the command is entered with an option other than WAIT, the negative exit will be taken from decision 72 and the response will be streamed through the path B, 60, which is explained above.

The preferred embodiment, therefore, consists of two parts: operator-specified message streaming and command-option response handling. The operator-specified message streaming is the subsetting of messages for display according to a set of selection criteria specified by an operator which defines a message stream. Command-option response handling is the specification of command response handling utilizing the command options of Table I upon command issuance.

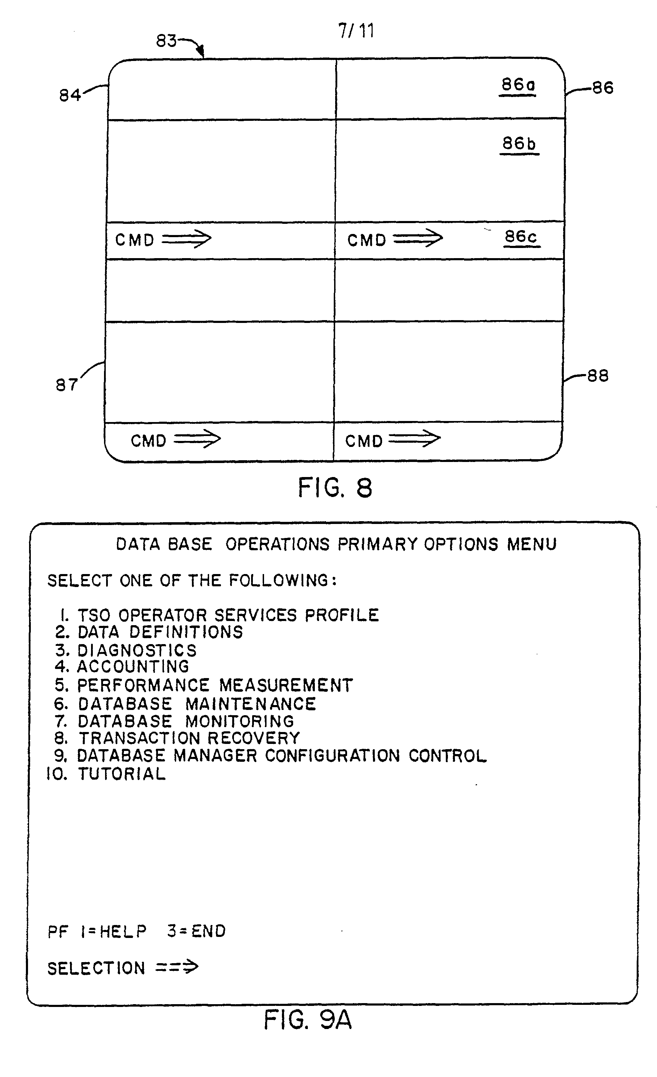

In the described embodiment of the invention, an operator terminal has a display screen and associated service which has the format illustrated in Figure 8. In Figure 8, the display screen 83 includes four viewports 84, 86, 87, and 88. Preferrably, the upper left-hand corner viewport 84 maps to the window for the synchronous work screen, while the viewports 86, 87, and 88 map to respective asynchronous work screens. As illustrated in Figure 8, each work screen, synchronous or asynchronous, has a format consisting of two or more fields. The asynchronous work screen 86 illustrates three fields as 86a, 86b, and 86c. The fields 86a and 86b are designated as the "held" and "general" message fields, respectively. Thus, messages in the stream linked to the asynchronous work screen 86 which do not meet held criteria for the stream are displayed in message field 86b. Those messages which do meet held criteria in the stream definition are displayed in field 86a. Both message fields are scrolled. The field 86c is the command line which the command entered through the keyboard terminal is displayed. The synchronous work screen has, at least, message display and command entry entry fields.

The synchronous and asynchronous work screens of Figure 8 are generated by a display manager which updates the screens in parallel. The synchronous work screen is used for operator-initiated conversations with the system and the asynchronous work screens are for display of message streams.

Message streaming, according to the preferred embodiment, utilizes the five criteria or parameters shown in criteria set 1 in stream A of Figure 4. The selection criteria take advantage generally of system message architectures, conventions, and control data. The described embodiment of the invention is practiced on a multi-programming system of MVS/SP type available from the International Business Machines Corporation. For this product, examples of specific values for the five selection criteria illustrated in Figure 4 are given.

In the MVS system product, the source of the message can appear in the CD or MID fields of the message. The message ID indicates, for example, by an MVS message identification prefix, the product source of the message. An MVS or system source can appear in the CD field.

Other possible message sources can be a network source constituting a network node or communication line in a networking environment, or an application source, constituting an executing installation-specific application program.

In the MVS system product, message type values may be found in message control data in the form of a message descripter, a WTOR flag, and a monitor flag. Message type data is also found in the suffix of the message identifier.

The contents of a message are found in the message text. Examples include message about a specific source type, such as a printer, tapes, databases, and so on, or a message about a specific resource object, such as PRT1, TAPE01, and so on. Message language information is found in control data in the header of the message and relates, for example, to single- or double-byte character sets, mixed-byte character sets and directional languages.

Last, message delivery scope information is found, in MVS system products, in message control data relating to identification of an operator, broadcast of the message locally, or broadcast of the message through a network.

Although not illustrated in Figure 4, the described embodiment incorporates characteristics in addition to selection criteria to complete a message stream's definition. Although not necessary to an understanding of message streaming as illustrated in Figure 3, the additional definition information includes the roll rate for the display of the scrolled message stream, an option to log messages, a screen alarm setting, and a maximum size for the message stream.

The described embodiment of the invention uses the MVS/ESA and TSO extension products all available from the IBM Corporation. In addition, the Interactive System Productivity Facility (ISPF) from the IBM Corporation is used to provide interactive, panel-driven operation at system user terminals. In this complement, MVS provides a system command and message exchange interface, and TSO enables user interaction with multiple terminal sessions on an MVS-based computing system. The described embodiment brings an added set of functions to those provided by this basic complement of system components. This supports timely display of selected messages in multiple viewports on a single screen or in multiple display screens. Also provided is the ability for a terminal operator to define criteria for selection and display of a message stream in each asynchronous screen created. For each asynchronous screen, the described embodiment permits the operator to define further criteria for selection of messages from a message stream to hold for operator action. Each asynchronous screen is dynamically initiated or terminated by an operator, resulting in activation and deactivation of a defined message stream. Last, this invention supports command-specific options for handling messages which are responsive to the commands.

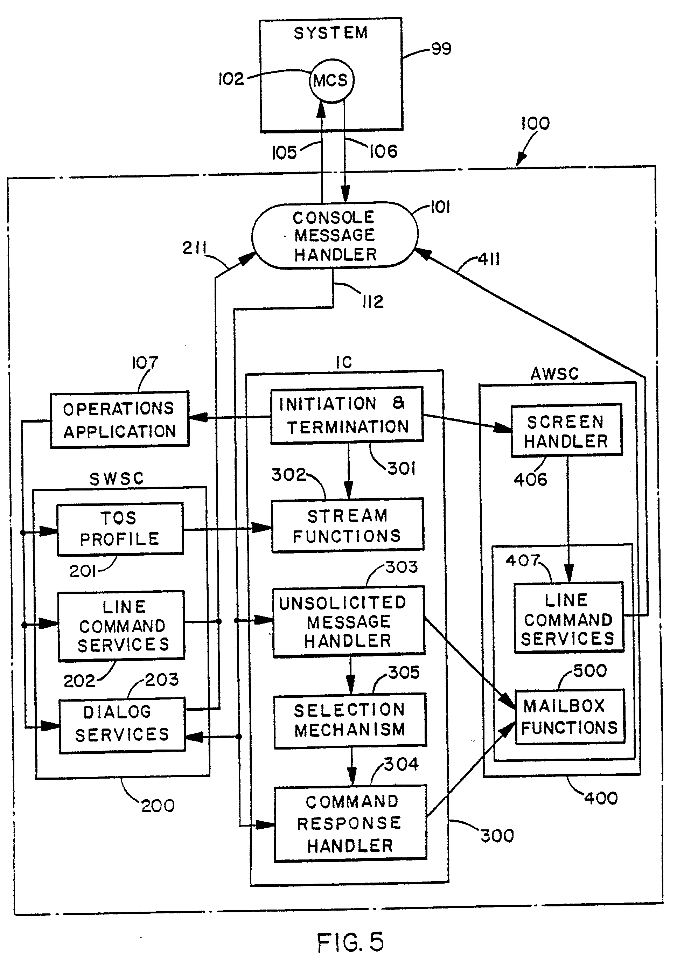

Figure 5 illustrates the described embodiment in connection with the basic complement of multi-user, multi-programming computer functions. Relatedly, a multi-user, multi-programming computer system includes a central computing facility 99 which has connected to it one console 100 of a plurality of consoles, each console affording its user access to the facility 99 in parallel with other users. A time-sharing message service in the computer system includes a console message handler 101 and MCS component 102. The MCS 102 and handler 101 are linked by a command transmission path 105 for transmitting commands from the terminal 100 to the facility 99, and a return path 106 for conducting messages from the facility 99 to the console 100. The console includes logic to support execution of an operations application 107 that provides interactive operation of the terminal 100 with its user.

The invention is practiced by three primary functional components, a synchronous work screen component (SWSC) 200, an initiation component (IC) 300, and an asynchronous work screen component (AWSC) 400. The AWSC 400 is replicated for each asynchronous work screen initiated through the console. The AWSC 400 includes a conventional mailbox function 500 including an area in pageable storage which is reserved for data addressed to the stream to which the AWSC 400 is linked, as well as to other processes executing on behalf of the console. Included in the mailbox function 500 is logic for controlling entry of messages into, and extraction of messages from, the reserve storage area.

The SWSC 200 includes a time sharing operation services (TOS) profile function 201 which is a panel-driven interface for defining message streams and storing message stream definitions in a persistent profile for the user. The line command services 202 include functions which receive commands entered on the synchronous work screen command line, tag them with a CART, and provide them to the handler 101 for forwarding. Last, the dialog services function 203 operates through an application program interface (API) with an application program executing for the console 100. The services rendered through the dialog services 203 include the forwarding of commands generated by the API and the return of responses to those processes in the event that the WAIT option is invoked.

The IC 300 includes an initiation and termination function 301 for initiation and termination of work screens and linking of created asynchronous work screens with defined message streams. The stream functions 302 of the IC 300 operate to create, modify, and delete message stream definitions used by the selection mechanism during execution. The unsolicited message handler 303 receives unsolicited messages from the handler 101 and disposes of them according to the procedure of Figure 3. The handler 303 has a procedure call connection with a selection mechanism 305. The selection mechanism 305 is invoked by the handler 303 when an unsolicited message is received, the selection mechanism 305 being used to compare the received message with the message stream definition and to identify the message as either not being contained in a message stream, or belonging to one of the streams defined by active streams in the active list. The handler 303 places unsolicited messages contained in a message stream in the mailbox of that defined stream. The command response handler 304 operates in the same fashion as the unsolicited message handler 303 to provide responses containing STREAM or SEND TO CARTS either to the AWSC 400 or SWSC 200 as provided in Figure 3.

The AWSC 400 includes a screen handler 406 which is configured upon initiation of the AWSC 400 with the screen display and format options included in the definition of the message stream linked to the screen.

The line command services 407 operate identically with the line command services 202 of the SWSC to tag and forward commands entered in the command line of the AWSC 400 during static mode operation.

In Figure 5, command linkages 211 and 411 deliver commands from, respectively, the SWSC 200 and AWSC 400 to the handler 101. These linkages are conventional and can include, for example, message passing or mailbox functions. A message linkage 112 provides messages from the handler 101 to the unsolicited message handler 303 and command response handler 304, and also to the dialog services 203.

The operations application 107 is used to format synchronous work screen supported by SWSC 200. The linkage between the application 107 and the SWSC components is a conventional call linkage. Conventional call linkages are also made to the stream functions 302 by the TOS profile 201, and by the initiation and termination 301 function. The initiation and termination function 301 attaches the operations application 107 to start it. It also detaches the application when the SWSC 200 is terminated. The initiation and termination 301 also attaches the screen handler 406 in the AWSC 400, while the screen handler 406 is linked to the line command services 407.

In operation, commands with selected options are generated and sent by the services 202, 203, and 407 to the message handler 101. These initiate execution of programs in the central facility 99 on behalf of the console or elicit responses from programs already executing there. In addition, the executing programs in the central facility 99 asynchronously generate unsolicited messages for distribution to the consoles. Thus, there is a stream of messages provided from the facility to the console 100 on message path 106.

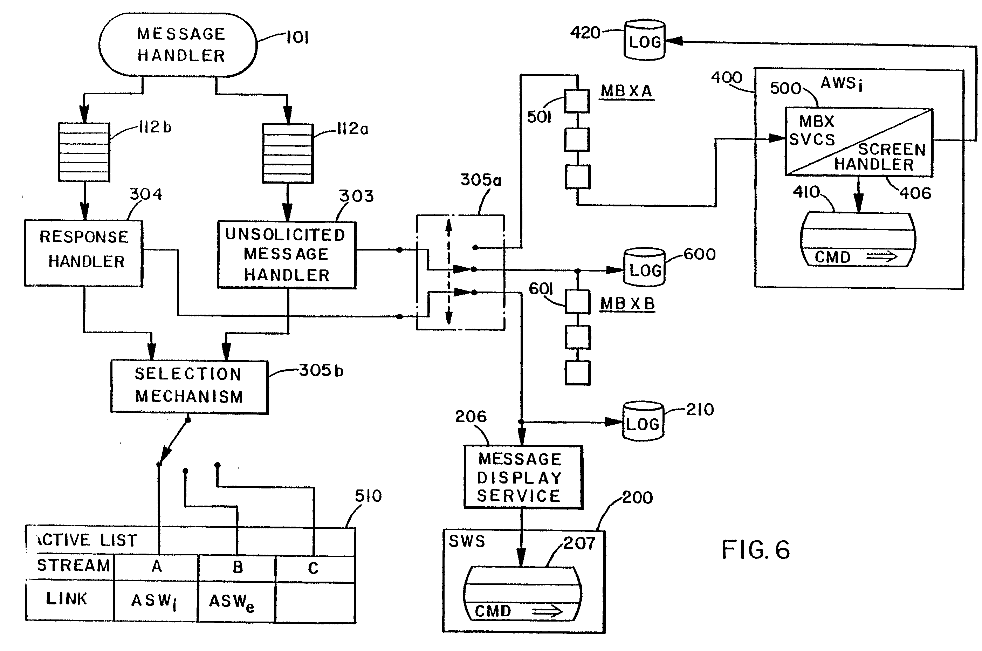

Figure 6 illustrates, in more detail, the interconnection of SWSC, IC, and AWSC functions in streaming messages to the synchronous and asynchronous work screens controlled by the SWSC 200 and AWSC 400, respectively. Incoming messages are discriminated by the message handler 101 according to whether they are or are not unsolicited. In the MCS message scheme, the CD field of a message includes bits which indicate when a message is unsolicited. Of course, the CART field indicates that a message is a response. Unsolicited messages are placed on the message queue 112a, while remaining response messages are placed on the message queue 112b. The unsolicited message handler 303 obtains a message from the unsolicited message queue 112a and makes a procedure call to the selection mechanism 305. In Figure 6, the selection mechanism is shown in two parts, 305a and 305b, as an aid in understanding the invention. The selection mechanism part 305b receives the procedure call from the message handler 303, accesses the active list 510 to conduct the comparison procedure described above with reference to Figures 3 and 4 for the message currently held by the calling handler. Messages to be held are tagged. Each streamed message is identified as belonging to one or more active streams. According to how the message is classified by the selection mechanism part 305b, the mechanism part 305a acts as a crossbar switch to connect the message held by the handler 303 to a terminal for delivery to the mailbox maintained for an active defined message stream or is displayed on the synchronous work screen using a TSO display service 206.

The response handler 304 obtains the message from the response queue 112b, and invokes the selection mechanism 305. If the CART of the message indicates the STREAM option, the interaction of handler 304 with the selection mechanism parts 305a and 305b is as described for the disposition of unsolicited messages. In essence, responses with the STREAM option are treated in the same manner as unsolicited messages and delivered to a message stream mailbox or to the synchronous work screen. However, if the response includes a SEND TO CART the selection mechanism 305b is used only to determine whether the message is held and the cross bar switch part 305a is set according to the target designated in the SEND TO option. This means the message will be tagged, if held, and provided directly to either the mailbox of a defined message stream or the synchronous work screen.

The crossbar switch part 305a of the selection mechanism 305 switches a received message or response to a mailbox of a defined active stream or to the synchronous work screen for display. In this regard, the mechanism part 305a connects to a mailbox 501, the mailbox for defined stream A (MBX A). MBX A 501 is accessed by the mailbox services 500 for provision to the screen handler 406 which displays the message in one of the general message fields, according to the criteria set in the definition of stream A. When displayed, the message is logged on a log 420 maintained for message stream A. Similarly, a mailbox 601 is maintained for stream B, as well as a log 600. Messages displayed on the synchronous work screen 207 are provided to the message display service 206.

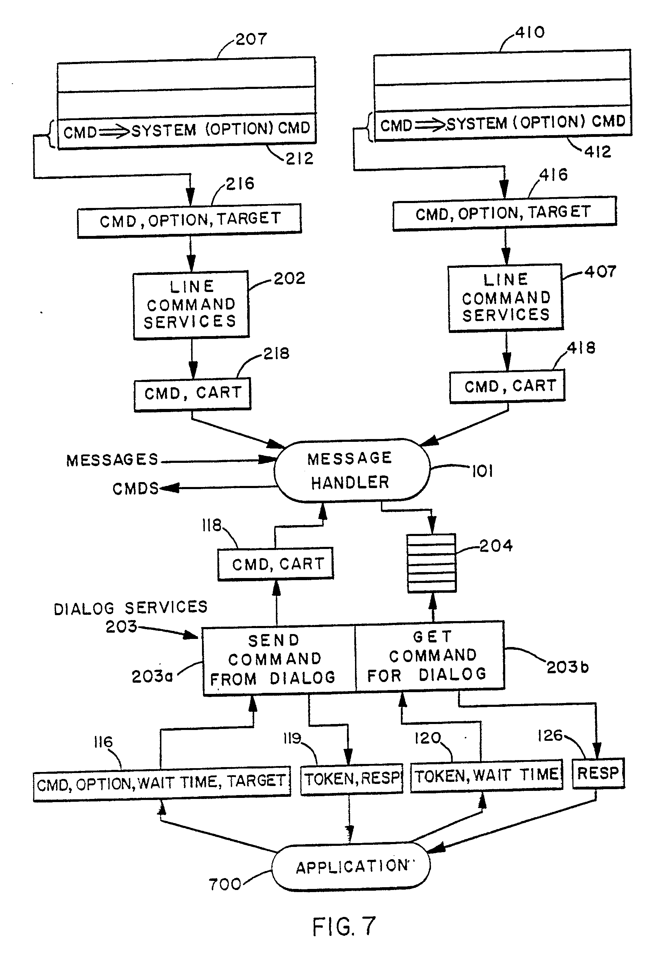

Refer now to Figure 7 for a more detailed illustration of the dialog services and the line command services.

The line command services 202 for the synchronous work screen operate in substantially the same manner as the services 407 for the asynchronous work screen. The sole exception is that the line command services 407 are disabled when the asynchronous work screen is in DYNAMIC mode. However, with the setting of the mode option to STATIC, the line command services 407 are operable. The synchronous work

EP 0 408 309 A2

screen 207 includes a command line 212 in which is displayed a command being entered by the user. For command-option response processing, the command has the form illustrated in the command line 212. The form includes a verb SYSTEM followed by an OPTION field, after which the command itself is entered. In the described embodiment, the system operator can only enter the STREAM or either of the SEND TO options. The WAIT option is reserved only for dialog service interfaces with an executing application. The command is provided, together with the option selected, to the line command services in the form 216. The form 216 includes the command, the selected option, and a TARGET object if the option selected is SENDTO. In this case, the TARGET is set to the recipient indicated in the SENDTO field. Thus the TARGET can be set to a code for the synchronous work screen (sync) or to a defined message stream (STREAM_). The line command services receive the command form 216, and process and format it for provision for the message handler 101. After processing by the line command services 202, the command has the form indicated by reference numeral 218, which includes the command, and the CART. The command and the form 218 is passed to the message handler 101 and forwarded to the central facility.

The dialog services 203 include send command and get message components 203a and 203b. The dialog services 203 are invoked automatically by an application program 700 or process through an application programming interface (API) initiated for execution on behalf of the console 100. It is understood that the application process may engage in dialog with executing programs in the central facility 99. It is asserted that the dialog will be conducted by provision of commands through the API and receipt of responses through the API. When initiated, the user can select any of the options of Table I for specific commands which the application 700 is to generate. Such options can include the WAIT option. When the WAIT option is invoked, the application process suspends execution for a time denoted as wait time. The wait time can have any positive value, down to and including 0. Thus, when a command is generated by the application 700 it has the form given by 116. In this regard, it includes the command (CMD) the selected option, the wait time, if WAIT option is selected, and the target if one of the SEND TO options is elected. The send command service 203a receives the command and produces, in response, a command record of the format 118, which it passes to the message handler 101. The send command process 203a also returns to the calling API 700 a list 119 including a token and response type (RESP). The token conforms essentially to the CART of the command record 118. The response type is a code indicating the type of response or responses expected to the command 118. This information is obtainable from an indexed table (not shown) which associates every command in the underlying system with one or more response. In the MVS system product, responses are uniquely identified by their MID fields. When a message with a WAIT option indicated in its CART is received by the handler 101, it is placed on the WAIT response queue 204. If a wait time greater than zero was selected, the send command component 203a will pause for the selected time. If a response is received within that time, it will be returned to the application 700 by the send command component. Otherwise, the send command component will return control to the application. The application 700, upon receiving the list 119 when control is returned from the send command service 203a without a response, invokes the get message component of 203b of the dialog services 203. The application 700 passes the token received in the list 119 and the wait time for the command 116 to the get message service 203b in a list 120. When called, the get message service 203b begins scanning the list 204 for the WAIT message whose CART matches the token in the list 120. When it finds the message, it extracts it from the list 204 and returns it in a response record (RESP) 126 to the calling application 700.

Components illustrated in Figures 5, 6, and 7, which are necessary to the described embodiment are illustrated in greater detail in Tables II-X. These components operate on data structures described in Appendix I.

Refer to Appendix I for a description of the definitions and formats of data objects used in the described embodiment. The description is in the form of an Ada-like design language from which the code for the described embodiment can be readily derived.

The instantiation statements (0001-0104) establish data object type definitions specific to the MVS system product with the TSO implementation. The data object type definitions (statements 0005-0077) associate criteria set parameters with data objects defined for MVS, TSO, IBM Graphical Data Display Manager, and ISPF. For example, in the definition of message source types, the source can come from specific MVS data such as the message ID prefix, the job name, or the system name. The format of the message source data object definition supports the selection by an operator of either the prefix, the job name, or the system name data and a message. See statements 0009-0014. Inspection of the message type, message language, and message delivery scope definitions will confirm that specific values for these attributes are selectible by the operator. Statements 0067-0077 support operator selection of message display parameters, such as color, highlighting, and intensity. The abstract object statements (0083-0104) ending the instantiation of Appendix I map the specific MVS and TSO data types to the generic description

10

of data objects beginning in the appendix at statement 0117, and ending at 0133. In this listing, the response_token_type corresponds to the CART described above.

In the abstract representation of a message stream in Appendix I, the type definition statements 0140-0384 establish all data object types needed for representation of the message screen and its procedures. Procedure parameters are defined for a return code (0140-0150), command options (0154-0158), dialog and line command options (0160-0170) and a command response target (0174-0176).

Asynchronous work screen data objects are given beginning at statement 0194. An asynchronous work screen mode can be either dynamic or static. In the static mode, the command line is displayed and operative; in the dynamic mode, only the general and held message fields are active. Each work screen has an alarm setting (0218), which provides the operator with the option to activate or deactivate alarm-sounding when a message with its alarm set is streamed to the work screen.

In Appendix I, message selection criteria data types are given in statements 0230-0265, and the types are collected into sets in statements 0270-0274. Message selection criteria kinds are differentiated between "select" and "hold" in statements 0281. The set of selection criteria is linked to the display and alarm option data objects in statements 0298-0302. In this regard, if the streaming process indicates that the message meets one of the criteria sets in the selection group, then the display and alarm options selected, will be activated. Thus, if the alarm option is selected, an alarm will sound when the message is displayed assuming activation of the alarm setting.

The generic selection set record is labeled as a "select" or "hold" set in statements 0308 and 0309. Display parameters, including scrolling rate and the number of message lines in the general message field, are defined in statements 0320-0331. The held message field size is defined in statements 0337. The option to log or not log a message is given in statement 0342.

A complete stream definition data object is laid out in statements 0349-0358. As illustrated, the stream definition includes the stream name, the log and alarm options, the scrolling rate, the location of a window divider separating the held from the general message fields, and the collection of selection criteria sets and held criteria sets. This record is entered into the active message list, together with an activation flag (0365-0372) which links the defined stream with an asynchronous work screen. When linked to an asynchronous work screen, the defined stream is considered to be active, otherwise, the message stream is non-active.

The entry for a defined message stream in the active message list is summarized in statements 0378-0386, while the list (set) of message streams is laid out in statements 0391-0393.

As with Appendix I, Tables II-X are presented in the format of an ADA-type design language.

In Table II, the STREAM functions 302 ares illustrated. The procedures in this table are invoked from panels generated by the operator profile service 201. The procedure in statements 0421-0434 defines a new message stream and adds it to the set of message streams for the user. The selection criteria establish which messages are directed into the stream for delivery to the asynchronous work screen initiated by the operator and linked to the stream. The hold criteria establish which messages are selected for display in the held field of the asynchronous work screen. In the described embodiment a held message appears with a special indicator in the general message field and is rolled to the top of the field. Upon reaching the top of the field, the held message is added to the list in the held message area. If the log parameter option is YES, the messages are logged upon their receipt into the message stream. As is conventional, the operator can browse the log to reference messages which may have been deleted from the stream by overflow of the mailbox. The alarm option can be set to YES to generate an audible indication for messages selected by criteria having the YES alarm presentation option.

The delete_stream procedure deletes a defined message stream from the active message list. The procedure in statements 0470-0473 provides for modification of defined message streams.

The initiation and termination service 301 in Table III is invoked to initiate or terminate a work screen. When the operations application is requested, the synchronous work screen is automatically initiated in statements 0484-0489. Preferably, a command, TOSSYNC, is entered to initiate a synchronous work screen with the attached operations application. Once the synchronous work screen is initiated, an asynchronous work screen can be initiated by statements 0497-0500. Upon initiation, the asynchronous work screen will be in the dynamic mode, displaying the message stream to which it is linked. As indicated in the procedure statement 0499, initiation of the asynchronous screen automatically links it to the named message stream. The termination procedure of statement 0511 is invoked from an active asynchronous work screen in the static mode on the command line, or with an interrupt halting execution of the asynchronous work screen. This function may be assigned to a function key.

The screen handler 406 is illustrated in the set of procedures listed in Table IV. These procedures are invoked from an indicated active asynchronous work screen. In the multi-viewport display of Figure 8, the active work screen for which any one of these procedures is invoked can be indicated by moving the screen cursor to the active work screen.

The procedure of statement 0530 permits the operator to switch modes. If the new mode is STATIC, the command line is displayed and the message windows are prepared for scrolling. If the new mode is DYNAMIC, the command line is erased and the message windows are refreshed to display the latest messages. Automatic updating of the message windows is also resumed when the dynamic mode is invoked. This function may be assigned to a toggle key.

The delete message procedure of statement 0545 deletes a message in the held message list which is indicated by a cursor. If the message is in the held message field, the message is removed from the field. Otherwise, the held message indicator for the message is turned off. This can be a key function with a cursor positioned on the message to be deleted. This function is available only in STATIC mode.

The scroll procedure for statement 0564 scrolls the scrolled message window in the indicated direction. This function is available only in the STATIC mode.

The jump procedure of statement 0576 activates the message field to which the cursor has been moved. This is a key function and available only in the STATIC mode.

The move procedure of statement 0588 moves the divider between the message windows to change the size of the held message field. This function is available only in the STATIC mode.

Scrolling rate is adjusted in the procedure beginning at statement 0604. This function is invoked from an asynchronous work screen; it may be assigned to a key, and is only available in the STATIC mode.

The alarm modification procedure beginning at statement 0620 temporarily changes the alarm setting for the message stream displayed on the asynchronous work screen. This function is invoked from the asynchronous work screen, is assigned to a key, and is available only in the STATIC mode.

The last procedure of Table IV is the refresh procedure in statements 0637-0639 and is used to refresh both message fields while the screen is in the STATIC mode.

The line command services 407 and 202 are illustrated in Table V. As indicated, both are invoked from the command line on the synchronous and asynchronous work screens. The message process parameter in statement 0717 is the option code and the target statement 0718 is either SYNCH or STREAM__ if the SENDTO option is indicated.

In connection with the line command services in Table V, Table VI illustrates how the CART code is set in response to the option and target information provided in statements 0717 and 0718.

The handlers 304 and 303 are illustrated, respectively, and Table VII and and Table VIII. In the FUNCTION statement of the command response handler in Table VII, the tos__token object is the CART in a returned response. As Table VII indicates, the command response handler 304 will stream responses to the synchronous work screen if the target is SYNC. Otherwise, the message is directed by a call to the selection mechanism 305a in Table IX(A). The call is implicit in Table VII in the "otherwise" statement, where the selection mechanism 305a is referred to as the "streaming parameters".

Table VIII illustrates the unsolicited message handler 303 and operates by implicitly invoking the selection mechanism 305a through the statement "get the streaming parameters".

It will be appreciated with reference to Tables VII and VIII that any message which cannot be delivered because the mailbox for the stream is full will be sent to the synchronous screen for display.

With reference to Table IX(A), it is asserted that the message handlers 303 and 304 include a provision for setting a TARGET code. This step is implicit in the "get the streaming parameters" steps of the handlers. In the command response handler, the TARGET code is set to STREAM or SENDTO__ according to the CART of a response. The unsolicited message handler sets the TARGET code to STREAM in every case. The TARGET code is passed in the call to the selection mechanism, and keys selection operations. This enables the selection mechanism 305a to treat the STREAM option responses and unsolicited messages identically. In this regard, when the target (CART) of the message received by a handler is STREAM, the active entries in the active message list are inspected in sequence to determine whether the message meets the selection criteria ("if selected"). If selected, the message is next tested against any held criteria, and if the message is held, it is marked. So marked, the message is enqueued on the mailbox for the stream, the "streamed" flag is set, and the procedure is exited. Otherwise, if the mailbox is full, the appropriate flag is set and the procedure is exited. Under the "else" statement of Table IX(A), the assumption is that the SENDTO option has been invoked. In this case, the targeted stream is found in the active message list and the targeted message is compared against any held selection criteria in the message definition. The message is then marked, if appropriate, enqueued, or returned to the synchronous screen if the mailbox is full.

The selection mechanism 305a invokes the selection mechanism 305b for performing the comparison procedure illustrated in Figure 4. The procedure of Table IX(B) is invoked by the "if selected" statement and both of the "if held" statements of the selection mechanism 305a (Table IX(A)). The selection mechanism 305b compares the message characteristics against the criteria sets for the found active defined message screen and returns a code indicating whether the information values in the message equal all of the indicated values in the current criteria set.

The dialog services 203 are illustrated in Table X and include the send command procedure beginning with statement 0654 and the get message procedure, beginning with statement 0693. Statement 0657 assigns the command option code to the msg_process data object, and the response destination indicated in the SENDTO option to the target data object in statement 0659. The token returned by the send command procedure in statement 0660 is the CART.

The get message procedure receives the token (CART) and the WAIT time and, when found, returns the response in the form of the response_type code obtained from the MID field of the message.

As described above, the IC, SWSC, and AWSC components of the invention work together to implement operator-specified message streaming and command-option response handling in the MVS and TSO/E environment. Following is an example of how an operator uses the invention to interact with an MVS system product. Assume first, that the operator is responsible for managing a group of IMS (information management systems) in DB (database) subsystems on the MVS system. Refer to Figures 9A-9I for an understanding of operator actions and system response in the context of the best mode described above.

First, the operator initializes four time sharing option sessions on a terminal having a display screen with four viewports as illustrated in Figure 8. Such a terminal can be the 3290 product available from the assignee of this invention.

Operation of the invention illustrated in Figure 5 is represented by Figures 9A-9I, which show the format given the panels for interactive operation to define a message stream and to enter a command with a response option.

When a TOSSYNC command is invoked by the user, the terminal resources allocate the data sets given in Appendix I as required for the message streaming procedure of the invention. An active message list is generated, together with the initial synchronous work screen panel. The initiation procedure initiated by entry of TOSSYNC also allocates message, table, and profile data sets to support the line command and profile services. The procedure may also include, if necessary, allocation of the SWSC dialog services, line command services, and profile services to the interactive system facility in order to permit the facility to offer the services in an interactive context.

The profile services provide panels and dialogs for the operator to define and adjust message stream definitions.

An initial panel is provided by the attached application to the user in response to the TOSSYNC command. This panel is illustrated in Figure 9A. Figure 9A signifies the initiation of a synchronous work screen with the operation application and its linking with a console. This is provided for in the command syntax for the TOSSYNC command, which is:

TOSSYNC ispf_parameters{CONSNAME(console_name)}

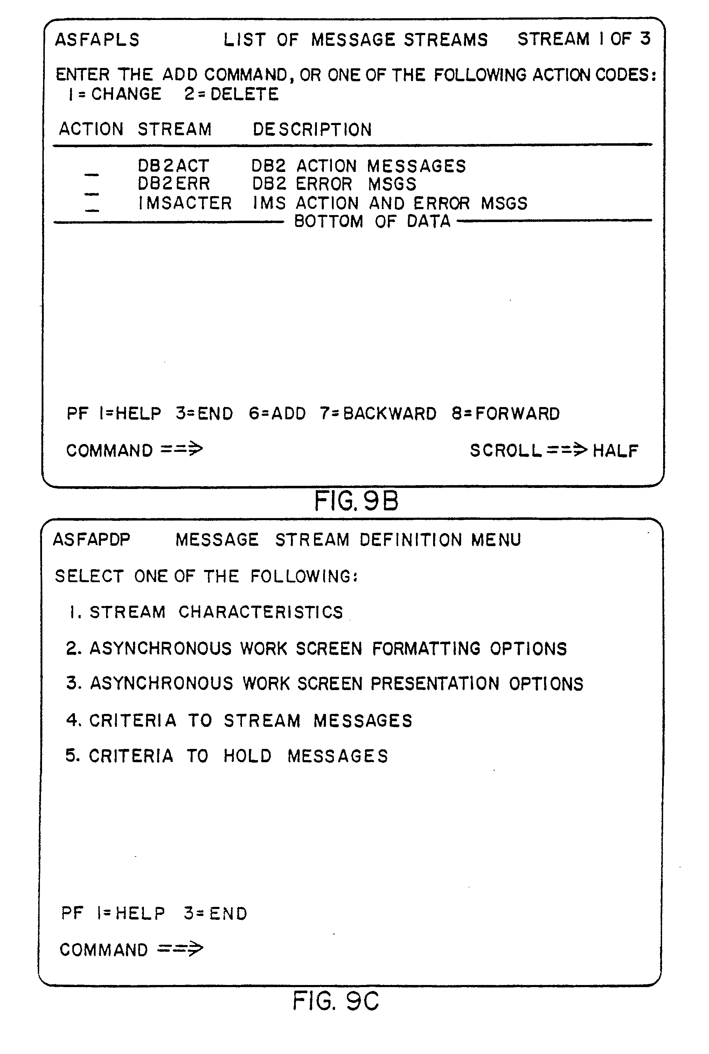

The field ispf_parameters specifies the operations application selected by the user and all the necessary parameters for starting that application in the interactive facility environment. The CONSNAME field specifies the console name for this dialog. Selection of the first menu item results in provision of the panel of Figure 9B.

The panel in Figure 9B displays a scrollable list of the streams currently defined for an operations application, as well as a user-provided description of each. It also provides functions to allow the user to define and modify message stream definitions and characteristics. The Add function available form this panel is invoked to add a message stream definition.

To add a new stream to the profile, the user invokes the Add function of the panel of Figure 9B from the command line or by a program function (PF) key. This invokes a message stream definition panel illustrated in Figure 9C.

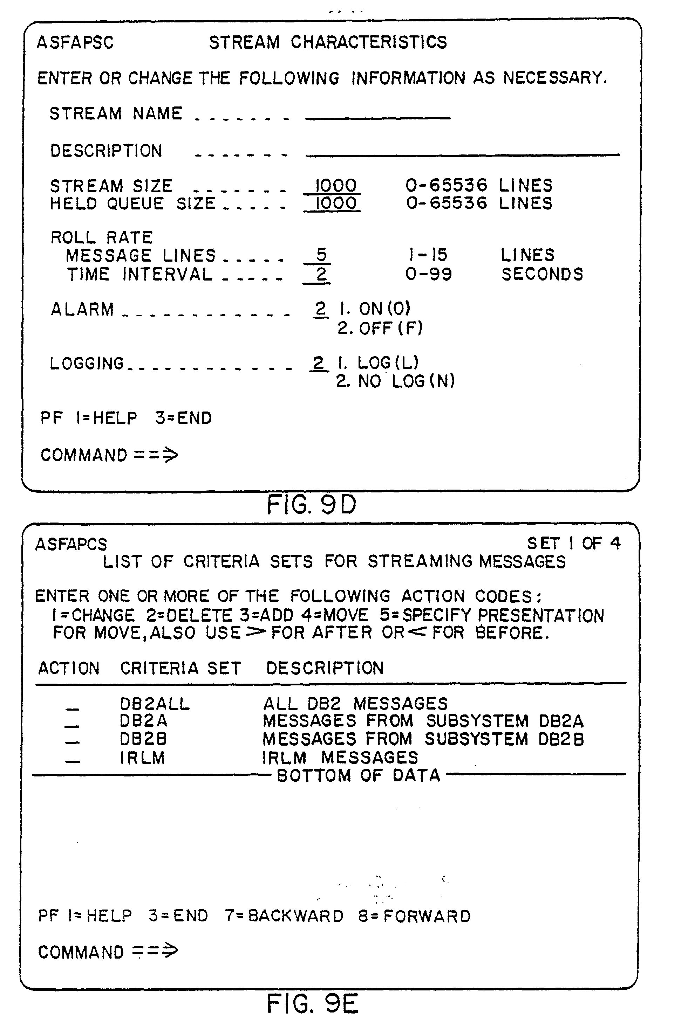

Using the panel of Figure 9C, the user can select options to define stream parameters, specify asynchronous work screen formatting and presentation functions, define the selection criteria sets to stream messages, and define the hold criteria sets to hold messages. Selection of any of these options invokes a panel from which the user enters parameters or actions needed to define a new stream. As stated above, a stream definition consists of a stream name, stream characteristics, and, at least, a message selection collection of criteria sets. To specify message stream parameters, the user selects option 1 from the panel of Figure 9C, which invokes the stream characteristics panel of Figure 9D.

The stream characteristics panel of Figure 9D displays and allows the user to define a unique stream name and to define or modify the stream description, the stream size, held message queue size, alarm option, roll rate, and logging option. If the user is in the process of adding a new stream by way of the Add function of the panel in Figure 9B, defaults for the named parameters are displayed, except for the stream name. If this panel is entered to change stream characteristics for an already defined message stream, the current values are displayed.

To define or modify asynchronous screen format and presentation options, the user selects options 2 or 3 from the message stream definition panel of Figure 9C. These panels are not illustrated herein. However, the skilled artisan will be able to provide panels for these functions which include options for location of the window divider, entry of a time stamp, a job name, a system name, and stream presentation attributes.

On the panels for criteria set definition, selected by option 4 on the panel of Figure 9C, the selection criteria types are displayed, each with an entry field for listing multiple values of the type. The logical interpretation of the panel is given above with reference to Figure 4. To define criteria for streaming messages, the user selects option 4 from the panel of Figure 9C, resulting in presentation of the stream characteristics panel in Figure 9E.

In Figure 9E, a list of the named criteria sets is displayed, each of which is used to select a message set for the given stream. The panel provides functions to allow the definition, modification, deletion and reordering of these criteria sets, as well as specification of presentation attributes for the messages associated with each criteria set. The panel of Figure 9E presents action codes permitting a user to change a criteria set, delete a criteria set, move a criteria set, or specify a presentation attributes for messages.

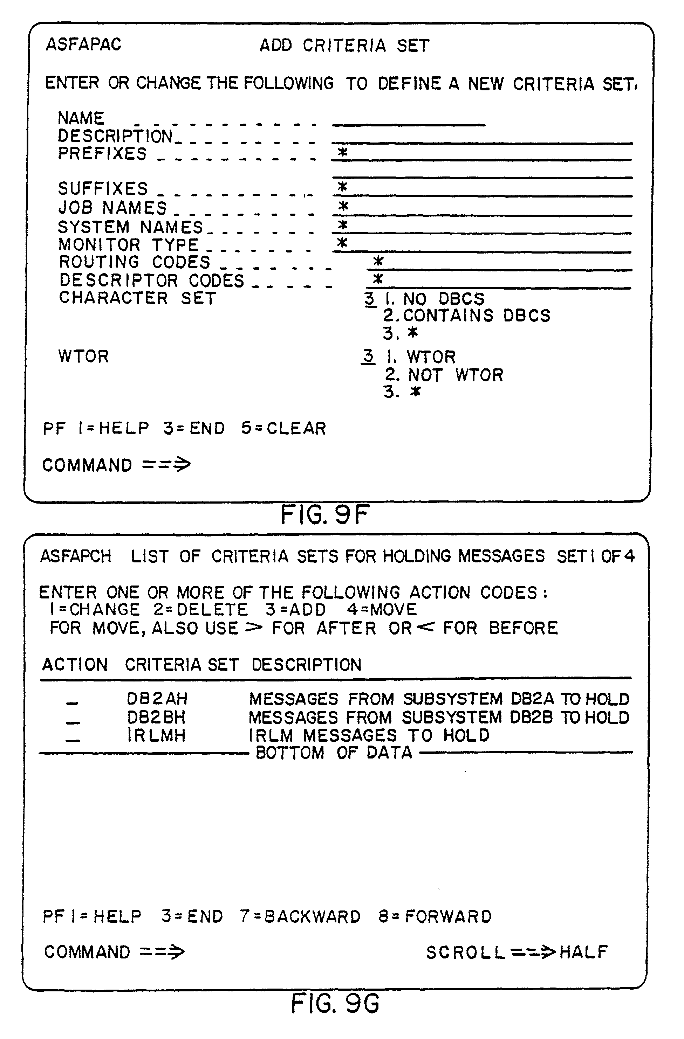

A user adds a new criteria set to the collection of criteria sets defined for a stream of panel 9E by entering the action code for Add in an Action column associated with an existing criteria set. The new criteria set will be added following this one and will be displayed as the next row. This method of adding allows the user to order criteria sets as desired. Ordering may be desirable for performance reasons, since messages are selected for streaming according to the first criteria set found that matches the message's attributes. Issuing this action code invokes the panel of Figure 9F, which provides fields for the user to enter information needed to define a new criteria set.

From the panel of Figure 9F, the user specifies the name and description for the criteria set, which will be displayed in the list on the panel of Figure 9E. The asterisk in Figure 9F indicates the provision of the default value for the associated selection criteria values; these may be changed as necessary.

From the panel of Figure 9E, the user may modify an existing criteria set by entering the action code for Change. This invokes a change criteria set panel (not illustrated), which displays the criteria set name, description and associated selection criteria values. The panel permits the user to change information on the panel as necessary, except for the name.

Deletion of a criteria set from the panel of Figure 9E is accomplished by entry of the action code for Delete.

It may be desirable to change the ordering set of the criteria sets in Figure 9E for performance reasons. The criteria sets listed in the panel of Figure 9E are displayed in the order that the streaming mechanism described above processes them when searching for a match. The Move function allows the user to mover a criteria set to a different location within the list of criteria sets.

To define criteria to hold messages, the user selects option 5 from the panel of Figure 9C. This panel invokes the panel of Figure 9G.

The panel of Figure 9G displays a list of named criteria sets defined for that stream which are used to select a message for holding. The panel provides functions to allow modification, deletion, addition, and reordering of a held criteria set. The functions used to define held criteria sets are the same as the functions used to define criteria sets for selecting messages described above, and produce panels corresponding to those described in connection with corresponding action codes of Figure 9E.

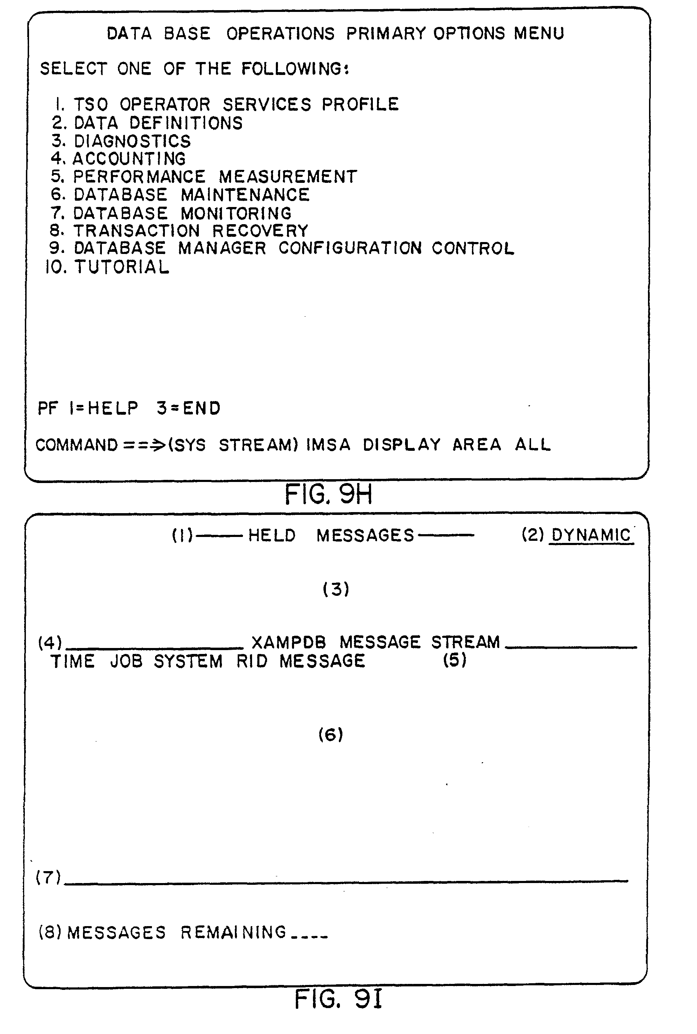

Figure 9H illustrates the visual manifestation of a line command service operation on a synchronous work screen. The SWSC line command service permits a user to enter systems commands from the synchronous work screen command line. A user may direct command response to the synchronous work screen, or to the asynchronous work screen displaying a stream that he specifies by name. He may also request that the response(s) be streamed to a an asynchronous work screen according to the selection criteria defined for the stream linked to the named work screen. If none of these options are specified, the response(s) are returned to the screen on which the command was entered.

The line command services are invoked when the user enters a command verb preceding a line command. Preferrably, the verb assigned to the command is "SYSTEM", or some variant. SWSC line command services are invoked by a command whose syntax is given by:

SELECT PGM(LINE) PARM(CZPARM)

This entry causes the interactive system function to invoke the line command services when the command verb is issued from the command line. When the line command services are invoked, the user enters commands on the command line with the format illustrated in Figure 9H.

In Figure 9H, the user has specified a command verb of SYSTEM in a command table maintained by

14

the interactive system facility which permits a truncated form of the verb (SYS) to be used. In this example, IMSA is a command prefix which permits the computer system to recognize the program to which the command is to be routed. The STREAM option causes the command response to be streamed according to selection criteria defined for the invoked application. The general syntax for line commands has the following form:

Command-verb{(STREAM|SENDTO(stream__name|SYNC}))Command

where the command_verb in the form of SYSTEM, or variant, is preferred, and wherein the STREAM and SENDTO options are as described above. IF no response option is specified, the responses are directed to the screen from which the command is entered. If inactive when the response returns, the response is directed to the synchronous work screen. The command specifies the system command to be issued.

The described embodiment enables the panel dialog functions to issue commands and specify handling of the associated responses by way of command procedure illustrated as:

```
SENDCOMD COMD (command)

    {|STREAM|                                              }
    {|SENDTO({stream_name|SYNC})|                          }
    {|WAIT|(nnn)|| |TOKEN(var1)| |RESPONSE(var2)|}
```

where SENDCMD denotes a command from a panel dialog function which specifies before option responses of STREAM, SENDTO SYNC, SENDTO STREAM_, or WAIT, all described above. The TOKEN variable specifies the name of an interactive system facility shared variable where a token is returned. The get_message service is used to retrieve this value from the shared variable pool. The token is used to retrieve the command responses not delivered when using a WAIT option due to timer expiration or multiple responses. The RESPONSE variable specifies the name of an interactive system facility shared variable where the first command response is returned when using the WAIT response option. The get_serve message service is used to retrieve the value from the shared variable pool. If no response option is specified, the response is returned to the synchronous work screen.

The get_message service is provided for retrieving the command responses having the WAIT value in the CART. This service is invoked when there are multiple responses to commands, since SENDCMD only returns the first response with the WAIT option. It is also used when the specified wait time is exceeded or when the dialog is conducting parallel processing of multiple commands. The dialog provides a token to specify the response to be returned. It receives this token when issuing SENDCMD with the WAIT option. The dialog may optionally specify a maximum wait time for the response to be received. If no wait time is specified, the value defaults to 0. This effectively allows the get_message service to be used as query to see if the response is returned. If so, it is retrieved. The command syntax for this service is as follows:

```
GETMSG TOKEN(response_token)

       |WAITTIME(nnn)|

       RESPONSE(varname)
```

The TOKEN field specifies the token used to retrieve the response. The WAITTIME specifies the maximum time in seconds to wait on the response. The RESPONSE specifies the name of the shared interactive service function variable where the response is returned.

An asynchronous work screen format is illustrated in Figure 9I for the dynamic mode. The dynamic mode is used for dynamic displaying of messages only. As stated above, the static mode is used for entering commands; it is also used for scrolling the windows and other static mode functions selected by the designer. In the dynamic mode, the asynchronous work screen linked to a defined message stream appears as in Figure 9I. In this case, the defined message stream is XAMPDB. Messages appear in the general message window, with the held messages marked with an asterisk. The held messages are displayed initially in the general message window and rolled up and out of the window to the held message window. The work screen mode (2) is displayed in the top right-hand corner of the held message window. The held message window (3) contains the messages that are designated by the held criteria set. Messages are displayed here until moved out of the window by subsequent addition of more held messages. The message window divider line (4) separates the two windows. It also contains the stream names supplied by the operator linking the work screen to the defined message stream. The message header lines (5) are the first two lines of the scroll message window (6). The general message window (6) displays the messages that were selected for the specified message screen. New messages appear at the bottom of the window. Older messages roll up the window, as new messages appear. Held messages appear marked with an asterisk to distinguish them from non-held messages. Each message is displayed according to the presentation attributes included in the message stream definition.

The mode of the asynchronous work screen ql is toggled by activation of a programmed action key. When the static mode is selected by operation of the key, the mode (2) displays changed to STATIC and the screen presentation changes by deleting the display of messages remaining (8) and displaying, below the bottom dividing line (7) a set of programmed actions and a command line. The command line provides for entry of line commands having the format illustrated above with reference to the synchronous work screen. The program functions include, among others, a command to adjust roll rate, a command to adjust alarm setting, and a command to delete a message from held status.

## TABLE II

### Stream Functions 302

```
0421  procedure add_stream
0422      (
0423      name                    : in message_stream_name_type;
0424      stream_size            : in natural;
0425            held_list_size in natural;
0426            log        : in log option_type;
0427            alarm      : in alarm_type;
0428            roll_rate  : in roll_rate_type;
0429            win_pos    : in row-type;
0430            selection_criseldait_list_type;
0431            hold_critenihold crit_list_type;
0432            rc         : out return_code_type
0433      )
0434  <*(*
0459  procedure delete_stream
0460      (
0461            name       : in message_stream_name_type;
0462            rc         : out return_code_type
0463      )
0464  <*(*
0470  procedure modify_stream
0471      (
0472            name       : in message_stream_name_type;
0473            rc         : out Return_code_type
```

## TABLE III

### Initiation & Termination 301

```
0484 procedure initiate_sync_screen
0485      (
```

```
0486            appl      : in appl_type;
0487       rc   : out return_code_type
0488       )
0489 <*(*
0497 procedure initiate_async_screen
0498     (
0499     name  : in message_stream_name_type;
0500     rc    : out return_code_type
0511 procedure terminate_async_screen
0512     (
0513     rc     :out return_code_type
```

TABLE IV

Screen Handler 406

```
0526 -----------------------------------------------------------
0527 -- The following procedures are invoked from an active
0528 --asynchronous work screen. (AWSC).
0529 -----------------------------------------------------------
0530 procedure switch_modes
0531     (
0532     mode  : in out mode_type
0545 procedure delete message
0546     (
0547     cursor          : in cursor_position_type;
0548     rc    : out return_code_type
0564 procedure scroll
0565     (direction      : in direction_type;
0566     rc    : out return_code_type
0576 procedure jump_window
0577     (
0578     rc    : out return_code_type
0588 procedure move_window_divider
0589     (
```

```
0590    direction       : in vertical_direction_type;
0591    increment       : in positive;
0592    rc      : out return_code_type
0604 procedure adjust_roll_rate
0605    (roll_rate      : in roll rate type;
0606    rc      : out return_code_type
0620 procedure modify_alarm
0621    (
0622    alarm : in alarm_type;
0623    rc      : out return_code_type
0637 procedure refresh
0638    (
0639    rc      : out return_code_type
```

TABLE V

Line Command Services 407, 202

```
0710 ---------------------------------------------------------
0711 -- The following procedure is invoked from the command
0712 -- on the synchronous and asynchronous work screens
     -- (SWSC, AWSC)
0713 ---------------------------------------------------------
0714 procedure send_command_from_command_line
0715    (
0716    cmd    : in cmd_type;
0717    msg_process     : in line_cmd_option_type;
0718    target          : in sendto_option_type;
0719    rc    : out return_code_type
0720    )
0721 <*(* Send the command and handle the response according
0722       to the specified message processing option.
0723       If the message processing option is:
0724         STREAM-->
0725            The response(s) will be handled according to the
```

0726        selection criteria for the active message streams.

0727        If a response is not selected for any active message

0728        stream, response handling reverts to SENDTO SYNC.

0729    SENDTO-->

0730        If the target is 'SYNC', the response(s) will be

0731        displayed on the synchronous work screen.  Otherwise,

0732        the response(s) will be sent to an asynchronous work

0733        screen for display in the specified message stream.

0734        If the specified message stream is not active

0735        (not displayed on any asynchronous work screen), then

0736        response handling reverts to SENDTO SYNC.

0737    undefined-->

0738        The response(s) will be displayed on the screen from

0739        which the line command is entered.  If the screen is

0740        not active when the response returns, response

0741        handling reverts to SENDTO SYNC.

0742

0743    If translation services are available, the response(s)

0744    will be translated before display


TABLE VI

Set CART


FUNCTION     = Return a CART value according to the

                 response option specified by the caller.


OPERATION    = Put the TOS user token in the CART.

              Case the response option is

            When SENDTO =>

              if the sendto option is 'SYNC' then

                  put the SYNC stream id value in the

                      CART.

              else

                  get the stream id for the provided

                      stream and put it in the CART.


20

```
When STREAM =>
    put the STREAM symbolic stream id in the
        CART.
Otherwise, return INVALID_OPTION return
    code.
```

TABLE VII

Command Response Handler 304

```
01* FUNCTION = Handle command responses having the TOS_TOKEN.
               This procedure is ATTACHed by the TOSSYNC command
               processor and executes until DETACHed.


02* OPERATION = Initialize the full mailbox message.
                Initialize message buffer variables.
                Establish a recovery routine.
                Get the initial message buffer.
                Loop
                  Wait for a command response with the given
                      Cart value.
                  If successful,
                     case stream id is
                       when SYNC => format the response and
                                    send it to the synchronous
                                    work screen.
                       otherwise => get the streaming parameters,
                                    and stream the response.
                                    if not successful,
                                       if full_mailbox,
                                          send full mailbox
                                          message to sync screen
                                       end if
                                    send the command response
                                       to the sync screen.
```

```
                        '                    end if

            end loop



                        TABLE VIII
                Unsolicited Message Handler 303


    01* FUNCTION = Handle unsolicited console messages.
                   This procedure is ATTACHed by the TOSSYNC command
                   processor and executes until DETACHed.


    02* OPERATION = Initialize the full mailbox message.
                    Initialize message buffer variables.
                    Establish a recovery routine.
                    Get the initial message buffer.
                    Loop
                       Wait for the next unsolicited message.        .
                       If successful,
                           get the streaming parameters,
                           and stream the console message.
                       if not successful,
                           if full_mailbox,
                               send full mailbox
                                   message to sync screen.
                           end if
                           send the console message
                               to the sync screen.
                       end if
                    end loop



                        TABLE IX (A)
                    Selection Mechanism 305a


    01* FUNCTION = Stream the message using the message stream
```

set active list.


```
02* OPERATION = If terminating, ABEND.
                Streamed, Full_mailbox := FALSE, FALSE.
                If target = STREAM then
                    For each active screen:
                        Find the active entry.
                        If selected then
                            If held then mark the message.
                            Enqueue the message on the mailbox.
                            If successful then
                                Streamed := TRUE.
                            Else Full_Mailbox := TRUE.
                          Unfind the active entry.
                        end for.
                  Else
                      For each target stream in the active list:
                          Find the active entry.
                          If held, mark the message.
                          Enqueue the message on the mailbox.
                          If successful then
                              Streamed := TRUE.
                          Else Full_Mailbox := TRUE.
                          Unfind the active entry.
                      end if.

                If Streamed then rc := OK.
                Else
                    If Full_Mailbox then rc := FULL-MAILBOX.
                    Else rc := NOT_STREAMED.
```


TABLE IX (B)

Selection Mechanism 305b

```
01* FUNCTION = Determine whether or not the given criteria list
                 selects the message.


02* OPERATION = While not selected and not at end of list,
                 See if message is selected by criteria for
                     message id prefix and
                     message id suffix and
                     job name        and
                     system name     and
                     monitor type    and
                     routing codes   and
                     descriptor codes and
                     WTOR            and
                     character set.
                 Return TRUE or FALSE.
```

TABLE X

Dialog Services 203

```
0650 ------------------------------------------------------------
0651 --The following procedures are invoked from dialogs running on
0652 --the synchronous work screen. (SWSC)
0653 ------------------------------------------------------------
0654 procedure send_command_from dialog
0655    (
0656    cmd              : in cmd_type;
0657    msg_process      : in dialog_cmd_option_type;
0658    wait_time        : in wait_time_type;
0659    target           : in sendto_option_type;
0660    token            : out response_token_type;
0661    response         : out response_type;
0662    rc               : out return_code_type
0664 <* (*Send the command and handle the response according to the
0665    specified message processing option.  If the message
```

```
0666      processing option is:
0667        STREAM--> leave the response and token undefined.
0668           The response(s) will be handled according to the 0669
selection criteria for the active message stream.
0670           If a response is not selected for any active message
0671           stream, response handling reverts to SENDTO SYNC.
0672      WAIT --> wait for the first response for
0673           the specified wait time.  Return the response if
0674           it arrives before time expiration.  Return
0675           the token for later response retrieval.
0676      SENDTO --> leave the response and token undefined.
0677           If the target is "SYNC", the response(s) will be  0678
displayed on the synchronous work screen.  Otherwise,
0679           the response(s) will be sent to an asynchronous work
0680           screen for display in the specified message stream.
0681           If the specified message stream is not active (not
0682           displayed on any asynchronous work screen), then
0683           response handling reverts to SENDTO SYNC.
0684      undefined --> leave the response and token undefined.
0685           The response(s) is returned to the synchronous work
0686           screen.
0687
0688   If translation services are available, the response(s)
0689   will be translated before display.
0690   *)
0691 *>;
0692
0693 procedure getmsg_from_dialog
0694   ( token          : in response_token_type;
0695     wait           : in wait_time_type;
0696     response       : out response_type;
0697     rc             : out return-code-type
0698   )
0699 <* (*
0700   Return a message entry associated with the token.
```

```
0701

0702    The message contains control data and message text as

0703    defined by the system.

0704

0705    If a message entry is not found for the specified token,

0706    then the response is undefined.

0707    *)

0708 *>;
```

In at least preferred embodiments the invention affords an operator the ability to define message groups by constructing sets of selection criteria, where the selection criteria correspond to information characteristics of the message. These sets of criteria are formed independently of consoles. Next the operator initiates a visual output resource component at a system terminal and binds the initiated visual output component to a defined message group. Then, in the sequence of messages provided to the terminals of the system, information characteristics of the messages are compared with the criteria sets defining the message group. For any message in the sequence of messages whose information characteristics match the criteria sets which define a message group the message is delivered to the visual output component bound to the defined message group. This provides for operator-initiated selection and delivery of messages without regard to whether the messages are unsolicited, or are responses to operator-initiated action.

APPENDIX

```
0001
0002-------------------------------------------------------------
0003-- Define message source types.
0004-------------------------------------------------------------
0005 type source_spec_type is (PREFIX, JOB_NAME, SYSTEM_NAME;
0006 type source_type is
0007   record (source_spec : source_spec_type)
0008     case source_spec is
0009       when PREFIX =>                      -- produce source
0010         prefix                  : mvs.message_id_prefix_type;
0011       when JOB_NAME =>                     -- job source
0012         job_name                : mvs.job_name_type;
0013       when SYSTEM_NAME =>                  -- system source
0014         system_name             : mvs.system_name_type
0015     end case;
0016   end record;
0017
0018-------------------------------------------------------------
0019-- Define message type types.
0020-------------------------------------------------------------
0021 type descriptor_spec_type is (DESC_CODE, WTOR, MONITOR, SUFFIX);
0022 type descriptor_type is
0023   record (descriptor_spec :  descriptor_spec_type)
0024     case descriptor_spec is
0025       when DESC_CODE =>              · -- general classification
0026         descriptor_code         : mvs.message_descriptor_type;
0027       when WTOR =>                      -- request for operator reply
0028         wtor_flag               : mvs.wtor_flag_type;
0029       when MONITOR =>                   -- report from system monitor
0030         monitor flag            : mvs.monitor flag type;
0031       when SUFFIX =>                    -- severity level
0032         suffix                  : mvs.message_id_suffix_type;
0033     end case;
0034   end record;
```

```
0035
0036-----------------------------------------------------------
0037-- Define message language types.
0038-----------------------------------------------------------
0039 type language_spec_type is (CODE_PAGE, CHAR_TYPE);
0040 type language_type is
0041   record (language spec : language spec type)
0042     case language_spec is
0043       when CODE_PAGE =>          -- code page
0044         code_page_id            :mvs.code_page_id_type;
0045       when CHAR_TYPE =>          -- single or double byte
0046                                 --   character set
0047         dbcs_flag               : mvs.dbcs_flag_type;
0048     end case;
0049   end record;
0050
0051-----------------------------------------------------------
0052-- Define message delivery scope types.
0053-----------------------------------------------------------
0054 type routing_type is (ROUTE_CODE, CONSOLE_ID);
0055 type delivery_type is
0056 record (routing : routing_type)
0057   case routing is
0058     when ROUTE_CODE =>          -- local broadcast
0059       routing_code             : mvs.routing_code_type;
0060     otherwise;                 -- operator-specific
0061   end case;
0062 end record;
0063
0064-----------------------------------------------------------
0065-- Define message display option types.          --
0066-----------------------------------------------------------
0067 type color type is gddm_type;
0068 type highlighting_type is gddm.highlighting_type;
0069 type intensity_type is gddm.intensity_type;
```

```
0070 type msg_display_options_type is
0071   record
0072     color                    : color_type
0073     highlighting             : highlighting_type;
0074     intensity                : intensity_type
0075   end record;
0076
0077 type second_type is range 0..59;
0078
0079
0080----------------------------------------------------------
0081-- Instantiate the generic design for MVS and TSO/E.
0082----------------------------------------------------------
0083 abstract object tso_message_stream_set is new
0084     message_stream_set
0085         (
0086             response_token_type        =>tso/e.cart-type,      .
0087             response_type              =>mvs.message_type,
0088             cmd_type                   =>mvs.command_type,
0089             screen_id_type             =>mvs.asid_type,
0090             message_source_type        =>source_type,
0091             message_descriptor_type    =>descriptor_type,
0092             message_contents_type      =>mvs.message_type,
0093             message_language_type      =>language_type,
0094             message_delivery_type      =>delivery_type,
0095             stream_name_type           =>string(1..16),
0096             unit_time_type             =>second_type,
0097             row_type                   =>range tso/e.row_range,
0098             column_type                =>range tso/e.column_range,
0099             msg_line_type              =>mvs.message_line_type,
0100             msg_display_options_type   =>msg_display_options_type,
0101             appl_type                  =>
0102                                        ispf.application-parameters-type,
0103             max_streams                =>256
0104         );
```

```
§ <<Generic Operator Services >>=

0105 with translation_services;        --as available
0106 --Message streams may be dynamically updated and displayed on
0107 --alternate screens.  A message stream may be defined to handle
0108 --either all asynchronous and unsolicited messages or may be
0109 --defined to handle only a subset of these messages.
0110 --
0111 --Subsetting may be done by selection criteria most easily
0112 --extracted from data about the message or the message itself.
0113
0114 --Message stream subsetting (message streaming) is defined in the
0115 --operator's profile data.
0116 generic
0117     type response_token_type is ANY;
0118     type response_type is ANY;
0119     type cmd_type is ANY;
0120     type screen_id_type is ANY;
0121     type message_source_type is ANY;
0122     type message_descriptor_type is ANY;
0123     type message_contents_type is ANY;
0124     type message_language_type is ANY;
0125     type message_delivery_type is ANY;
0126     type message_stream_name_type is string (<>);
0127     type unit_time_type is natural range<>;
0128     type row_type is integer range <>;
0129     max_row : in natural;
0130     type column_type is integer range<>;
0131     type msg_line_type is ANY;
0132     type msg_display_options_type is ANY;
0133     type appl_type is ANY;
0134     max_streams " in natural;
0135 abstract object message_stream_set is
0136
0137 ----------------------------------------------------------------
0138     --Define return codes for the procedures.                --
```

```
0139 ----------------------------------------------------------------------
0140    type return_code_type is (OK,
0141                                    WAIT_TIME_EXCEEDED,
0142                                    INVALID-RESPONSE_OPTION,
0143                                    MISSING_SENDTO_ARGUMENT,
0144                                    NOT_AUTHORIZED,
0145                                    RECURSIVE_INITIATION,
0146                                    NO_SELECTION_CRITERIA_DEFINED,
0147                                    MESSAGE_STREAM_NOT_DEFINED,
0148                                    KO
0149                                    );
0150
0151 ----------------------------------------------------------------------
0152    --Define options for sending commands.                          --
0153 ----------------------------------------------------------------------
0154 type cmd_option_type is ( SENDTO,
0155                              WAIT,
0156                              STREAM
0157                         );
0158
0159 ----------------------------------------------------------------------
0160    --All options are supported for commands sent from dialogs. --
0161 ----------------------------------------------------------------------
0162    subtype dialog_cmd_option_type is cmd_option_type;
0163
0164 ----------------------------------------------------------------------
0165    --Preclude the WAIT option for line commands.                   --
0166 ----------------------------------------------------------------------
0167 subtype line_cmd_option_type is cmd_option_type (SENDTO,
0168                                                    STREAM
0169                                                    );
0170
0171 ----------------------------------------------------------------------
0172 --Define possible targets of command responses.                   --
0173 ----------------------------------------------------------------------
```

```
0174 type sendto_option_type is string (1..16); -- 'SYNC'
0175                                            -- or stream name.
0176
0177 ------------------------------------------------------------
0178 -- Set default wait time for command response.          --
0179 ------------------------------------------------------------
0180 type wait_time_type is natural :=0;
0181
0182 ------------------------------------------------------------
0183 -- Define cursor position as (row, column).             --
0184 ------------------------------------------------------------
0185 type cursor_potition_type is
0186       record
0187          row                : row_type;
0188          column             : column_type
0189       end record;
0190
0191 ------------------------------------------------------------
0192 -- Define asynchronous work screen modes.               --
0193 ------------------------------------------------------------
0194 type mode_type is (DYNAMIC, STATIC) :=DYNAMIC;
0195
0196 ------------------------------------------------------------
0197 -- Define asynchronous work screen data type.           --
0198 ------------------------------------------------------------
0199 type async_screen_type is
0200       record
0201          screen             : screen_id_type;
0202          rows               : positive;
0203          columns            : positive;
0204          msg_divider        : row_type;
0205          cmd_divider        : row_type;
0206          mode               : mode_type
0207       end record;
0208
```

```
0209 ----------------------------------------------------------------
0210 -- Define asynchronous work screen cursor directions.       --
0211 ----------------------------------------------------------------
0212 type direction_type is (BACKWARD, FORWARD, RIGHT, LEFT);
0213 subtype vertical_direction_type is (BACKWARD, FORWARD);
0214
0215 ----------------------------------------------------------------
0216 -- Define asynchronous work screen alarm settings.          --
0217 ----------------------------------------------------------------
0218 type alarm_type is (OFF, ON) :=OFF;
0219
0220 ----------------------------------------------------------------
0221 ----------------------------------------------------------------
0222 -- Define types for operator-specification of selection     --
0223 --          criteria:                                       --
0224 ----------------------------------------------------------------
0225 ----------------------------------------------------------------
0226
0227 ----------------------------------------------------------------
0228 -- Define type for specifying message source.               --
0229 ----------------------------------------------------------------
0230 type msg_source_type is
0231     record
0232       deselect              : boolean;
0233       source                : message_source_type;
0234     end record;
0235 ----------------------------------------------------------------
0236 -- Define type for specifying message type.                 --
0237 ----------------------------------------------------------------
0238 type msg_descriptor_type
0239     record
0240       deselect              : boolean;
0241       descriptor            : message_descriptor_type
0242     end record;
0243 ----------------------------------------------------------------
```

```
0244 -- Define type for specifying message contents.        --
0245 ------------------------------------------------------------
0246 type msg_contents_type is
0247      record
0248        deselect          : boolean;
0249        contents          : message_contents_type
0250      end record;
0251 ------------------------------------------------------------
0252 -- Define type for specifying message language.        --
0253 ------------------------------------------------------------
0254 type msg_language_type is
0255      record
0256        deselect          : boolean;
0257        language          : message_language_type
0258      end record;
0259 ------------------------------------------------------------
0260 -- Define type for specifying message delivery scope.   . --
0261 ------------------------------------------------------------
0262 type msg_delivery_type is
0263      record
0264        deselect          : boolean;
0265        delivery          : message_delivery_type
0266      end record;
0267 ------------------------------------------------------------
0268 -- Define sets of these types.                        --
0269 ------------------------------------------------------------
0270 type source_set_type is set of msg_source_type;
0271 type descriptor_set_type is set of msg_descriptor_type;
0272 type contents_set_type is set of msg_contents_type;
0273 type language_set_type is set of msg_language_type;
0274 type delivery_set_type is set of msg_delivery_type;
0275
0276 ------------------------------------------------------------
0277 -- Define selection criteria kinds: Some selection criteria --
0278 --   select a message for a stream, others select a message --
```

```
0279 --   to put it in held status on the asynchronous work screen.--
0280 -----------------------------------------------------------------
0281 type selection_kind_type is (SELCT, HOLD);
0282
0283 -----------------------------------------------------------------
0284 -- Define selection criteria type as a record of those sets.--
0285 -----------------------------------------------------------------
0286 type selection_type is
0287     record(selection_kind : selection_kind_type)
0288        sources             : source_set_type;
0289        descriptors         : descriptor_set_type;
0290        contents            : contents_set_type;
0291        languages           : language_set_type;
0292        delivery_methods    : delivery_set_type;
0293        -----------------------------------------------------
0294        -- Include display and alarm options only if the   --
0295        --   the criteria type is for selecting a message, --
0296        --   rather than for putting it in held status.    --
0297        -----------------------------------------------------
0298        case selection_kind is
0299          when SELCT =>
0300                display_options : msg_display_options_type;
0301                alarm_option    : alarm_option_type
0302          end case;
0303        end record;
0304
0305 -----------------------------------------------------------------
0306 -- Define the kinds of selection criteria types.          --
0307 -----------------------------------------------------------------
0308 type selcrit_type is selection_type(SELCT);
0309 type holdcrit_type is selection_type(HOLD);
0310
0311 -----------------------------------------------------------------
0312 -- Define the kinds of selection criteria lists.          --
0313 -----------------------------------------------------------------
```

```
0314 type selcrit_list_type is list of selcrit_type;
0315 type holdcrit_list_type is list of holdcrit_type;
0316
0317 ------------------------------------------------------------
0318 -- Define the roll rate as message lines per unit time.   --
0319 ------------------------------------------------------------
0320 type roll_rate_type is
0321     record
0322       lines              : natural;
0323       time               : unit_time_type
0324     end record;
0325
0326 ------------------------------------------------------------
0327 -- Define a list of message lines on the asynchronous work--
0328 --   screen.                                              --
0329 ------------------------------------------------------------
0330 type msg_list_type is array(index range <>) of          .
0331       message_line_type;
0332
0333 ------------------------------------------------------------
0334 -- Define the list of held message lines on the asynchronous--
0335 --   work screen.                                         --
0336 ------------------------------------------------------------
0337 type held_list_type is msg_list_type;
0338               .                     ,
0339 ------------------------------------------------------------
0340 -- Define the log option and give it a default value of NO.--
0341 ------------------------------------------------------------
0342 type log_option_type is (NO, YES) := NO;
0343
0344 ------------------------------------------------------------
0345 -- Define the stream definition type.  It includes a row  --
0346 --   position for the divider betweent he message window and--
0347 --   the held message window.                             --
0348 ------------------------------------------------------------
```

36

```
0349 type stream_definition_type is
0350     record
0351        name              : message_stream_name_type;
0352        log               : log_option_type;
0353        alarm             : alarm_type;
0354        roll_rate         : roll_rate_type;
0355        window_divider    : row_type;
0356        selection_criteria : selcrit_list_type;
0357        hold_criteria     : holdcrit_list_type;
0358     end record;
0359
0360 -----------------------------------------------------------------
0361 -- Define the activation state of a message stream as a    --
0362 --   function of whether or not an asynchronous work screen--
0363 --   is displaying the message stream.                     --
0364 -----------------------------------------------------------------
0365 type active_type is (NOT_ACTIVE, ACTIVE);
0366 type active_state_type is
0367     record(active " active_type := NOT_ACTIVE)
0368       case active is
0369         when ACTIVE =>
0370               async_screen : async_screen_type;
0371       end case;
0372     end record;
0373
0374
0375 -----------------------------------------------------------------
0376 -- Define a message stream.                                 --
0377 -----------------------------------------------------------------
0378 type message_stream_type(size1, size2 : natural := 1000) is
0379     record
0380        definition        : stream_definition_type;
0381        msg_list          : msg_list_type(1..size1);
0382        held_list         : held_list_type(1..size2);
0383        active_state      : active_state_type;
```

```
0384      end record;
0385
0386 model
0387
0388 ---------------------------------------------------------------
0389 -- Define the set of message streams for an operator.      --
0390 ---------------------------------------------------------------
0391 type message_stream_set_type is set(max_streams) of
0392      message_stream_type;
0393 message_stream_set : message_stream_set_type;
0394
0395 constraint
0396    (*
0397    *);
0398
0399 ---------------------------------------------------------------
0400 -- Initialize the set to contain one message stream for   --
0401 --   selecting all messages.                              --
0402 ---------------------------------------------------------------
0403 initial
0404    (* Contains one member with selection criteria for selecting
0405       all messages.
0406    *);
0407 end model;
```

## Claims

1. A method of selectively delivering messages generated by a multi-console, multi-programming computer system for output through visual output resources of a console of said computer system, such method comprising the steps of:
at a console of said computer system, selecting and entering into said computer system message delivery criteria, said message delivery criteria corresponding to attributes of said messages;
initiating a first visual output resource component at a console in said computer system;
binding said visual output component to said message delivery criteria; .
providing a sequence of messages from said computer system to the consoles of said system;
comparing the message attributes of messages in said sequence of messages with said message delivery criteria; and
for a message in said sequence of messages with message attributes which match said message delivery criteria, delivering said message to said visual output component for display.

2. A method of streaming messages in a data processing system including a central processing unit for executing a plurality of processes, a plurality of consoles for providing commands for said processes and for receiving messages from said processes, and message passing means connected to said central

38

processing unit and to a console for passing commands from said console to said central processing unit and messages from said central processing unit to said console, comprising the following steps:

entering a set of message streaming criteria into said system through said console, said message streaming criteria corresponding to message attribute values;

initiating a visual output display resource component at said console;

binding said display resource to said set of message criteria;

providing a sequence of messages from said processes to said console;

comparing the message attributes of message in said sequence of messages with said set of message streaming criteria; and

for a message whose message attribute values match said set of message streaming criteria, displaying said message on said visual output component.

3. A method as claimed in any of claims 1 or 2, wherein said messages are scrolled through said visual output component at not more than a specified rate.

4. A method as claimed in any of claims 1 to 3, including the step of initiating further visual output resource components at said console bound to differing message delivery criteria.

5. A data processing system including a central processing unit for executing a plurality of processes, a plurality of consoles for providing commands for said processes and for receiving messages from said processes, message passing means connected to said central processing unit and to a console for passing commands from said console to said central processing unit and messages from said central processing unit to said console, and message streaming means for entering a set of message streaming criteria into said system through said console, said message streaming criteria corresponding to message attribute values; and message streaming means for

initiating a visual output display resource component at said console;

binding said display resource to said set of message criteria;

providing a sequence of messages from said processes to said console;

comparing the message attributes of message in said sequence of messages with said set of message streaming criteria; and

for a message whose message attribute values match said set of message streaming criteria, displaying said message on said visual output component.

6. A data processing system as claimed in claim 5, wherein said messages are scrolled through said visual output component at not more than a specified rate.

7. A data processing system as claimed in any of claims 5 or 6, wherein said message streaming means includes means for initiating further visual output resource components at said console bound to differing message delivery criteria.

FIG. 1
PRIOR ART

FIG. 2    PRIOR ART

FIG. 3

EP 0 408 309 A2

| CONTROL DATA | CART | MESSAGE ID | TEXT | 58 |

## ACTIVE LIST 53

| NAME | DEFINITION | | |
| --- | --- | --- | --- |
| | SELECTION CRITERIA | HELD CRITERIA | LINK |
| STREAM A | $\begin{bmatrix} \text{(SOURCE)} \\ \text{(TYPE)} \\ \text{(CONTENTS)} \\ \text{(LANGUAGE)} \\ \text{(SCOPES)} \end{bmatrix}_1 + [\text{CRITERIA}]_2 + \cdots + [\text{CRITERIA}]_i$ | $[\text{CRITERIA}]_n + \cdots + [\text{CRITERIA}]_z$ | $\text{AWS}_i$ |
| STREAM B | $[\text{CRITERIA}] + \cdots + [\text{CRITERIA}]$ | | |

FIG. 4

EP 0 408 309 A2

FIG. 5

FIG. 6

EP 0 408 309 A2

FIG. 7

83

84

86a 86

86b

CMD ⟹      CMD ⟹      86c

87                                          88

CMD ⟹      CMD ⟹

## FIG. 8

DATA BASE OPERATIONS PRIMARY OPTIONS MENU

SELECT ONE OF THE FOLLOWING:

1. TSO OPERATOR SERVICES PROFILE
2. DATA DEFINITIONS
3. DIAGNOSTICS
4. ACCOUNTING
5. PERFORMANCE MEASUREMENT
6. DATABASE MAINTENANCE
7. DATABASE MONITORING
8. TRANSACTION RECOVERY
9. DATABASE MANAGER CONFIGURATION CONTROL
10. TUTORIAL

PF 1=HELP   3=END

SELECTION ==⟹

## FIG. 9A

```
ASFAPLS          LIST OF MESSAGE STREAMS    STREAM I OF 3

ENTER THE ADD COMMAND, OR ONE OF THE FOLLOWING ACTION CODES:
  I = CHANGE   2 = DELETE

ACTION  STREAM      DESCRIPTION
_____
   _     DB2ACT      DB2 ACTION MESSAGES
   _     DB2ERR      DB2 ERROR  MSGS
   _     IMSACTER   IMS ACTION AND ERROR MSGS
_____ BOTTOM OF DATA _____




 PF I=HELP  3=END  6=ADD  7=BACKWARD  8=FORWARD

 COMMAND ==>                          SCROLL ==> HALF
```

FIG. 9B

```
ASFAPDP      MESSAGE STREAM DEFINITION MENU

SELECT ONE OF THE FOLLOWING:

  I. STREAM CHARACTERISTICS

  2. ASYNCHRONOUS WORK SCREEN FORMATTING OPTIONS

  3. ASYNCHRONOUS WORK SCREEN PRESENTATION OPTIONS

  4. CRITERIA TO STREAM MESSAGES

  5. CRITERIA TO HOLD MESSAGES




 PF I=HELP  3=END

 COMMAND ==>
```

FIG. 9C

```
ASFAPSC              STREAM CHARACTERISTICS

ENTER OR CHANGE THE FOLLOWING INFORMATION AS NECESSARY.

  STREAM NAME . . . . . . .  ————————————

  DESCRIPTION    . . . . . . .  ————————————————

  STREAM SIZE  . . . . . . .   1000    0-65536 LINES
  HELD QUEUE SIZE . . . . .    1000    0-65536 LINES

  ROLL RATE
     MESSAGE LINES . . . . .    5        1-15     LINES
     TIME INTERVAL . . . . .    2        0-99     SECONDS

  ALARM . . . . . . . . . . . .    2  1. ON (O)
                                      2. OFF (F)


  LOGGING. . . . . . . . . . . .   2  1. LOG (L)
                                      2. NO LOG (N)


  PF 1=HELP  3=END

  COMMAND ==>
```

FIG. 9D

```
ASFAPCS                                           SET 1 OF 4
        LIST OF CRITERIA SETS FOR STREAMING MESSAGES

ENTER ONE OR MORE OF THE FOLLOWING ACTION CODES:
  1=CHANGE 2=DELETE 3=ADD 4=MOVE 5=SPECIFY PRESENTATION
  FOR MOVE, ALSO USE > FOR AFTER OR < FOR BEFORE.

ACTION   CRITERIA SET   DESCRIPTION
———————————————————————————————————————————————————————
   _     DB2ALL         ALL DB2 MESSAGES
   _     DB2A           MESSAGES FROM SUBSYSTEM DB2A
   _     DB2B           MESSAGES FROM SUBSYSTEM DB2B
   _     IRLM           IRLM MESSAGES
————————————————————— BOTTOM OF DATA ————————————————





PF 1=HELP  3=END  7=BACKWARD  8=FORWARD

COMMAND ==>
```

FIG. 9E

```
ASFAPAC                    ADD CRITERIA SET

ENTER OR CHANGE THE FOLLOWING TO DEFINE A NEW CRITERIA SET.

   NAME _ _ _ _ _ _ _ _ _ _    _____
   DESCRIPTION_ _ _ _ _ _ _ _  _____
   PREFIXES _ _ _ _ _ _ _ _ _  *_____

   SUFFIXES _ _ _ _ _ _ _ _ _  *_____
   JOB NAMES _ _ _ _ _ _ _ _   *_____
   SYSTEM NAMES_ _ _ _ _ _ _   *_____
   MONITOR TYPE _ _ _ _ _ _    *_____
   ROUTING CODES _ _ _ _ _ _    *_____
   DESCRIPTOR CODES _ _ _ _ _   *_____
   CHARACTER SET               3 1. NO DBCS
                                 2. CONTAINS DBCS
                                 3. *

   WTOR                        3 1. WTOR
                                 2. NOT WTOR
                                 3. *

PF 1=HELP 3=END 5=CLEAR

COMMAND ==>
```

**FIG. 9F**

```
ASFAPCH  LIST OF CRITERIA SETS FOR HOLDING MESSAGES  SET 1 OF 4

ENTER ONE OR MORE OF THE FOLLOWING ACTION CODES:
 1=CHANGE 2=DELETE 3=ADD  4=MOVE
 FOR MOVE, ALSO USE > FOR AFTER OR < FOR BEFORE

ACTION  CRITERIA SET  DESCRIPTION
_____

   _      DB2AH        MESSAGES FROM SUBSYSTEM DB2A TO HOLD
   _      DB2BH        MESSAGES FROM SUBSYSTEM DB2B TO HOLD
   _      IRLMH        IRLM MESSAGES TO HOLD
_____ BOTTOM OF DATA _____




PF 1=HELP  3=END  7=BACKWARD  8=FORWARD

COMMAND ==>                           SCROLL ==> HALF
```

**FIG. 9G**

```
┌─────────────────────────────────────────────────────┐
│        DATA BASE  OPERATIONS PRIMARY OPTIONS MENU     │
│                                                       │
│  SELECT ONE OF THE FOLLOWING:                         │
│                                                       │
│    I. TSO OPERATOR SERVICES PROFILE                   │
│    2. DATA DEFINITIONS                                │
│    3. DIAGNOSTICS                                     │
│    4. ACCOUNTING                                      │
│    5. PERFORMANCE MEASUREMENT                         │
│    6. DATABASE MAINTENANCE                            │
│    7. DATABASE MONITORING                             │
│    8. TRANSACTION RECOVERY                            │
│    9. DATABASE MANAGER CONFIGURATION CONTROL          │
│   IO. TUTORIAL                                        │
│                                                       │
│                                                       │
│                                                       │
│                                                       │
│   PF I=HELP  3=END                                    │
│                                                       │
│   COMMAND ==⇒(SYS STREAM) IMSA DISPLAY AREA ALL       │
└─────────────────────────────────────────────────────┘
```

## FIG. 9H

```
┌─────────────────────────────────────────────────────┐
│      (I)───── HELD  MESSAGES──────    (2) DYNAMIC     │
│                                                       │
│                      (3)                              │
│                                                       │
│  (4)_____ XAMPDB  MESSAGE STREAM_____    │
│    TIME  JOB SYSTEM RID MESSAGE          (5)          │
│                                                       │
│                                                       │
│                      (6)                              │
│                                                       │
│                                                       │
│                                                       │
│                                                       │
│  (7)_____ │
│                                                       │
│  (8) MESSAGES  REMAINING____                          │
└─────────────────────────────────────────────────────┘
```

## FIG. 9I